# EUROPEAN PATENT APPLICATION

(11) **EP 4 593 494 A1**
(43) Date of publication of application: **30.07.2025**
(21) Application number: 23878838.4
(22) Date of filing: 04.09.2023
(51) Int. Cl.: H04W 72/1268

(54) **LOGICAL CHANNEL GROUPING METHOD AND COMMUNICATION APPARATUS**

(30) Priority: 19.10.2022 CN 202211277641; 03.11.2022 CN 202211372394
(71) Applicant: Huawei Technologies Co., Ltd., Shenzhen, Guangdong 518129 (CN)
(72) Inventor: HU, Shaoling, Shenzhen, Guangdong 518129 (CN); XU, Haibo, Shenzhen, Guangdong 518129 (CN)
(74) Representative: Gill Jennings & Every LLP
(86) International application number: PCT/CN2023/116791
(87) International publication number: WO 2024/082843

(57) **Abstract**

This application provides a logical channel grouping method and a communication apparatus, and relates to the field of wireless communication technologies. In this application, uplink scheduling efficiency and an uplink capacity can be improved. The method includes: A terminal device determines that to-be-reported buffered data exists on a first logical channel LCH, and sends a buffer status report BSR to a network device according to a preset configuration rule and based on the to-be-reported buffered data on the first LCH. The BSR indicates a first data volume and a first logical channel group LCG, the first data volume corresponds to the first LCG, the first data volume includes a data volume of first data, the buffered data includes the first data, and the first LCG is one of LCGs configured for the first LCH. A remaining packet delay budget PDB of the first data is within a first remaining PDB range; or a priority level of the first data is within a first priority level range, and the priority level of the first data is determined based on a remaining PDB of the first data and a data type of the first data.

## Description

This application claims priorities to Chinese Patent Application No. 202211277641.2, filed with the China National Intellectual Property Administration on October 19, 2022 and entitled "LOGICAL CHANNEL GROUPING METHOD, TERMINAL DEVICE, NETWORK DEVICE, AND APPARATUS", and to Chinese Patent Application No. 202211372394.4, filed with the China National Intellectual Property Administration on November 3, 2022 and entitled "LOGICAL CHANNEL GROUPING METHOD AND COMMUNICATION APPARATUS", both of which are incorporated herein by reference in their entireties.

### TECHNICAL FIELD

This application relates to the field of wireless communication, and in particular, to a logical channel grouping method and a communication apparatus.

### BACKGROUND

In a communication system, if a terminal device needs to send uplink data, the terminal device first sends a buffer status report (buffer status report, BSR) to a network device, where the BSR indicates an amount of buffered data to be sent by the terminal device, and the network device allocates a corresponding quantity of uplink resources to the terminal device based on the amount of the buffered data indicated by the BSR. In a BSR reporting mechanism, reporting is performed at a granularity of a logical channel group (logical channel group, LCG).

However, in an extended reality (extended reality, XR) service, different packets in one data burst (data burst) correspond to a same packet delay budget (packet delay budget, PDB), and packets in different data bursts correspond to different PDBs. Buffered data of the LCG may include packets in different data bursts, and the network device may allocate the uplink resource beyond a PDB of a packet (or some packets). Consequently, scheduling of the packets fails, uplink scheduling efficiency is reduced, and an uplink capacity is low.

### SUMMARY

This application provides a logical channel grouping method and a communication apparatus, to improve uplink scheduling efficiency and an uplink capacity. To achieve the foregoing objectives, this application uses the following technical solutions.

According to a first aspect, a logical channel grouping method is provided. The method may be performed by a terminal device, or may be performed by a chip used in a terminal device. The following uses an example in which the method is performed by the terminal device for description. The method includes: The terminal device determines that to-be-reported buffered data exists on a first logical channel LCH. Then, the terminal device sends a buffer status report BSR to a network device according to a preset configuration rule and based on the to-be-reported buffered data on the first LCH. The BSR indicates a first data volume and a first logical channel group LCG, the first data volume corresponds to the first LCG, the first data volume includes a data volume of first data, the buffered data includes the first data, and the first LCG is one of LCGs configured for the first LCH.

In a possible case, a remaining packet delay budget PDB of the first data is within a first remaining PDB range. The configuration rule includes a configuration rule 1: L LCGs and L remaining PDB ranges, where the L LCGs include the first LCG, the L remaining PDB ranges include the first remaining PDB range, the first LCG is associated with the first remaining PDB range, and L is a positive integer greater than or equal to 2.

In another possible case, a priority level of the first data is within a first priority level range, and the priority level of the first data is determined based on a remaining PDB of the first data and a data type of the first data. The configuration rule includes a configuration rule 2: L LCGs and L priority level ranges, where the L LCGs include the first LCG, the L priority level ranges include the first priority level range, the first LCG is associated with the first priority level range, and L is a positive integer greater than or equal to 2.

In other words, when the BSR indicates the first data volume and the first LCG, according to the preset configuration rule 1, when the first LCG is associated with the first remaining PDB range, the network device allocates an uplink resource to the terminal device based on the first remaining PDB range and the first data volume. For example, when a remaining PDB corresponding to the first remaining PDB range is small, the network device preferentially allocates an uplink resource to data corresponding to the first data volume; or when a remaining PDB corresponding to the first remaining PDB range is large, and a transmission resource is insufficient, the network device may allocate an uplink resource to data corresponding to the first data volume later, and preferentially allocate an uplink resource to another terminal device. This improves uplink scheduling efficiency and an uplink capacity. Alternatively, according to the preset configuration rule 2, when the first LCG is associated with the first priority level range, the network device allocates an uplink resource to the terminal device based on the first priority level range and the first data volume. For example, when a priority level corresponding to the first priority level range is low, the network device preferentially allocates an uplink resource to data corresponding to the first data volume; or when a priority level corresponding to the first priority level range is high, and a transmission resource is insufficient, the network device may allocate an uplink resource to data corresponding to the first data volume later, and preferentially allocate an uplink resource to another terminal device. This improves uplink scheduling efficiency and an uplink capacity.

In a possible design, when the configuration rule includes the configuration rule 1, the configuration rule 1 further indicates that a second LCG is associated with a second remaining PDB range. The L LCGs include the second LCG, and the L remaining PDB ranges include the second remaining PDB range. For example, the second LCG may be any LCG other than the first LCG in the L LCGs. In other words, in the configuration rule 1, the L LCGs one-to-one correspond to the L remaining PDB ranges.

In a possible design, when the buffered data further includes second data, and a remaining PDB of the second data is within the second remaining PDB range, the BSR further indicates a second data volume and the second LCG, where the second data volume corresponds to the second LCG, and the second data volume includes a data volume of the second data.

In other words, even if the buffered data on the first LCH includes data of different remaining PDBs, the terminal device determines, based on the remaining PDBs, different LCGs and data volumes that are indicated by the BSR. In this way, after receiving the BSR, the network device may learn of, according to the configuration rule 1 and based on the LCGs indicated by the BSR, remaining PDB ranges corresponding to different data volumes, and further properly allocate an uplink resource, to improve uplink scheduling efficiency.

In a possible design, when the remaining PDB of the first data is within the first remaining PDB range, that the buffered data includes the first data includes: When there is one remaining PDB of the buffered data, the buffered data is the first data.

In other words, when the buffered data on the first LCH has a same remaining PDB, and the remaining PDB is within the first remaining PDB range, the terminal device reports a data volume of the buffered data via one LCG (namely, the first LCG). In this way, after receiving the BSR, the network device may learn of the data volume and the remaining PDB range according to the configuration rule 1 to allocate an uplink resource, so that the terminal device uploads the buffered data on the first LCH in time. This improves uplink scheduling efficiency.

In a possible design, there are at least two remaining PDBs of the buffered data. That the remaining PDB of the first data is within the first remaining PDB range includes: When a minimum remaining PDB of the buffered data is used to determine a remaining PDB range corresponding to the buffered data, the minimum remaining PDB of the buffered data is within the first remaining PDB range, where the buffered data is the first data.

In other words, even if the buffered data on the first LCH includes data of different remaining PDBs, the terminal device determines, based on the minimum remaining PDB, the remaining PDB range corresponding to the buffered data, and then determines, based on the remaining PDB range, an LCG indicated by the BSR. In this way, after receiving the BSR, the network device may learn of a data volume and a remaining PDB range according to the configuration rule 1, to properly allocate an uplink resource. For example, when a remaining PDB indicated by the remaining PDB range is small, the network device preferentially allocates an uplink resource based on a data volume corresponding to the remaining PDB range, to improve uplink scheduling efficiency.

In a possible design, when the remaining PDB of the first data is within the first remaining PDB range, before the terminal device determines that to-be-reported buffered data exists on the first LCH, the method further includes: The terminal device receives first configuration information from the network device, where the first configuration information indicates the configuration rule 1.

In other words, the network device configures the configuration rule 1 for the terminal device, so that the network device properly manages reporting of the BSR.

In a possible design, before the terminal device determines that the to-be-reported buffered data exists on the first LCH, the method further includes: The terminal device receives second configuration information from the network device. The second configuration information is used to configure an LCG range corresponding to the first LCH, and the LCG range includes all or a part of the L LCGs, so that the first LCH is dynamically adjusted within the LCG range. In other words, a data volume of the buffered data on the first LCH can be reported via at least one LCG within the LCG range.

In a possible design, the second remaining PDB range is [T, Pmax], where T represents a PDB threshold, and Pmax represents a maximum transmission latency allowed for the buffered data. In other words, the remaining PDB range is obtained through classification based on the PDB threshold. The terminal device compares a remaining PDB of the buffered data with the PDB threshold, to determine a remaining PDB range corresponding to the buffered data. For example, when the remaining PDB of the buffered data is greater than or equal to the PDB threshold, the remaining PDB corresponding to the buffered data is the second remaining PDB range. This simplifies a processing process of the terminal device.

In a possible design, the first remaining PDB range is [0, T), where T represents the PDB threshold. In other words, the remaining PDB range is obtained through classification based on the PDB threshold. The terminal device compares the remaining PDB of the buffered data with the PDB threshold, to determine the remaining PDB range corresponding to the buffered data. For example, when the remaining PDB of the buffered data is less than the PDB threshold, the remaining PDB corresponding to the buffered data is the first remaining PDB range. This simplifies the processing process of the terminal device.

In a possible design, when the configuration rule includes the configuration rule 2, the configuration rule 2 further indicates that a second LCG is associated with a second priority level range, the L LCGs include the second LCG, and the L priority level ranges include the second priority level range. For example, the second LCG may be any LCG other than the first LCG in the L LCGs. In other words, in the configuration rule 2, the L LCGs one-to-one correspond to the L priority level ranges.

In a possible design, when the first data is first-type data, the first LCG is an LCG in a first set, the first set includes at least one LCG, and each LCG in the first set is used to transmit the first-type data. Alternatively, when the first data is second-type data, the first LCG is an LCG in a second set, the second set includes at least one LCG, each LCG in the second set is used to transmit the second-type data, and each LCG in the first set is different from each LCG in the second set.

In other words, the terminal device reports data volumes of different types of data via different LCGs.

In a possible design, when the priority level of the first data is within the first priority level range, that the buffered data includes the first data includes: When the buffered data is data of same type, and there is one remaining PDB of the buffered data, the buffered data is the first data.

In other words, when data types of the buffered data are the same and remaining PDBs of the buffered data are the same, all of the buffered data corresponds to a same priority level and is within a same priority level range.

In a possible design, when the priority level of the first data is within the first priority level range, that the buffered data includes the first data includes: When the buffered data is data of same type, there are at least two remaining PDBs of the buffered data, and a minimum remaining PDB of the buffered data is used to determine a priority level of the buffered data, the buffered data is the first data.

In other words, when data types of the buffered data are the same and remaining PDBs of the buffered data are different, the terminal device determines the priority level based on the minimum remaining PDB of the buffered data. In this way, all of the buffered data corresponds to a same priority level and is within a same priority level range.

In a possible design, before the terminal device determines that the to-be-reported buffered data exists on the first LCH, the method further includes: The terminal device receives third configuration information from the network device, where the third configuration information indicates the configuration rule 2.

In other words, the network device configures the configuration rule 2 for the terminal device, so that the network device properly manages reporting of the BSR.

In a possible design, before the terminal device determines that the to-be-reported buffered data exists on the first LCH, the method further includes: The terminal device receives fourth configuration information from the network device, where the fourth configuration information is used to configure a priority level range corresponding to the first LCH, and the priority level range configured by using the fourth configuration information includes one or more priority levels in the L priority level ranges, so that the first LCH is dynamically adjusted within the priority level range configured for the first LCH. In this way, even if the buffered data on the first LCH has different priority levels at different moments, the terminal device may report a data volume of the corresponding buffered data via a corresponding LCG.

In a possible design, the first priority level range is [0, K), and the second priority level range is [K, Kmax], where K represents a priority level threshold, and Kmax represents a lowest priority level that may exist in the buffered data.

In other words, the priority level range is obtained through classification based on the priority level threshold. The terminal device compares the priority level of the buffered data with the priority level threshold, to determine a corresponding priority level range. For example, when the priority level of the buffered data is less than the priority level threshold, a priority level range of the priority level of the buffered data is the first priority level range; or when the priority level of the buffered data is greater than or equal to the priority level threshold, a priority level range of the priority level of the buffered data is the second priority level range. This simplifies a processing process of the terminal device.

In a possible design, before the terminal device determines that the to-be-reported buffered data exists on the first LCH, the method further includes: The terminal device receives fifth configuration information from the network device. The fifth configuration information is used to configure the first LCG for the first LCH, so that the terminal device reports the data volume of the first data on the first LCH via the first LCG.

According to a second aspect, a logical channel grouping method is provided. The method may be performed by a network device, or may be performed by a chip used in a network device. The following uses an example in which the method is performed by the network device for description. The method includes: The network device receives a buffer status report BSR from a terminal device, where to-be-reported buffered data exists on a first logical channel LCH of the terminal device, the BSR indicates a first data volume and a first logical channel group LCG, the first data volume corresponds to the first LCG, the first data volume includes a data volume of first data, the buffered data includes the first data, and the first LCG is one of LCGs configured for the first LCH; and the network device allocates an uplink resource to the terminal device according to a preset configuration rule and based on the first data volume and the first LCG. A remaining packet delay budget PDB of the first data is within a first remaining PDB range. The configuration rule includes a configuration rule 1: L LCGs and L remaining PDB ranges, where the L LCGs include the first LCG, the L remaining PDB ranges include the first remaining PDB range, the first LCG is associated with the first remaining PDB range, and L is a positive integer greater than or equal to 2. Alternatively, a priority level of the first data is within a first priority level range, and the priority level of the first data is determined based on a remaining PDB of the first data and a data type of the first data. The configuration rule includes a configuration rule 2: L LCGs and L priority level ranges, where the L LCGs include the first LCG, the L priority level ranges include the first priority level range, the first LCG is associated with the first priority level range, and L is a positive integer greater than or equal to 2.

In a possible design, when the configuration rule includes the configuration rule 1, the configuration rule 1 further indicates that a second LCG is associated with a second remaining PDB range. The L LCGs include the second LCG, and the L remaining PDB ranges include the second remaining PDB range.

In a possible design, when the buffered data further includes second data, and a remaining PDB of the second data is within the second remaining PDB range, the BSR further indicates a second data volume and the second LCG, where the second data volume corresponds to the second LCG, and the second data volume includes a data volume of the second data.

In a possible design, when the remaining PDB of the first data is within the first remaining PDB range, that the buffered data includes the first data includes: When there is one remaining PDB of the buffered data, the buffered data is the first data.

In a possible design, there are at least two remaining PDBs of the buffered data. That the remaining PDB of the first data is within the first remaining PDB range includes: When a minimum remaining PDB of the buffered data is used to determine a remaining PDB range corresponding to the buffered data, the minimum remaining PDB of the buffered data is within the first remaining PDB range, where the buffered data is the first data.

In a possible design, when the remaining PDB of the first data is within the first remaining PDB range, before the network device receives the BSR from the terminal device, the method further includes: The network device sends first configuration information to the terminal device, where the first configuration information indicates the configuration rule 1.

In a possible design, before the network device receives the BSR from the terminal device, the method further includes: The network device sends second configuration information to the terminal device, where the second configuration information is used to configure an LCG range corresponding to the first LCH, and the LCG range includes all or a part of the L LCGs.

In a possible design, the second remaining PDB range is [T, Pmax], where T represents a PDB threshold, and Pmax represents a maximum transmission latency allowed for the buffered data.

In a possible design, the first remaining PDB range is [0, T), where T represents the PDB threshold.

In a possible design, when the configuration rule includes the configuration rule 2, the configuration rule 2 further indicates that a second LCG is associated with a second priority level range, the L LCGs include the second LCG, and the L priority level ranges include the second priority level range.

In a possible design, when the first data is first-type data, the first LCG is an LCG in a first set, the first set includes at least one LCG, and each LCG in the first set is used to transmit the first-type data. Alternatively, when the first data is second-type data, the first LCG is an LCG in a second set, the second set includes at least one LCG, each LCG in the second set is used to transmit the second-type data, and each LCG in the first set is different from each LCG in the second set.

In a possible design, when the priority level of the first data is within the first priority level range, that the buffered data includes the first data includes: When the buffered data is data of same type, and there is one remaining PDB of the buffered data, the buffered data is the first data.

In a possible design, when the priority level of the first data is within the first priority level range, that the buffered data includes the first data includes: When the buffered data is data of same type, there are at least two remaining PDBs of the buffered data, and a minimum remaining PDB of the buffered data is used to determine a priority level of the buffered data, the buffered data is the first data.

In a possible design, before the network device receives the BSR from the terminal device, the method further includes: The network device sends third configuration information to the terminal device, where the third configuration information indicates the configuration rule 2.

In a possible design, before the network device receives the BSR from the terminal device, the method further includes: The network device sends fourth configuration information to the terminal device, where the fourth configuration information is used to configure a priority level range corresponding to the first LCH, and the priority level range configured by using the fourth configuration information includes one or more priority levels in the L priority level ranges.

In a possible design, the first priority level range is [0, K), and the second priority level range is [K, Kmax], where K represents a priority level threshold, and Kmax represents a lowest priority level that may exist in the buffered data.

In a possible design, before the network device receives the BSR from the terminal device, the method further includes: The network device sends fifth configuration information to the terminal device, where the fifth configuration information is used to configure the first LCG for the first LCH.

According to a third aspect, a communication apparatus is provided. The communication apparatus includes a processor. The processor is coupled to a memory, and is configured to read and execute instructions in the memory, so that the communication apparatus performs the method performed by the terminal device in any one of the foregoing aspects or any possible design of any one of the foregoing aspects. The communication apparatus may be the terminal device in any one of the first aspect or the possible designs of the first aspect, or a chip that implements a function of the terminal device.

According to a fourth aspect, a chip is provided. The chip includes a processing circuit and an input/output interface. The input/output interface is configured to communicate with a module outside the chip. For example, the chip may be a chip that implements a function of the terminal device in any one of the first aspect or the possible designs of the first aspect. The processing circuit is configured to run a computer program or instructions, to implement the method in any one of the first aspect or the possible designs of the first aspect.

According to a fifth aspect, a communication apparatus is provided. The communication apparatus includes a processor. The processor is coupled to a memory, and is configured to read and execute instructions in the memory, so that the communication apparatus performs the method performed by the network device in any one of the foregoing aspects or any possible design of any one of the foregoing aspects. The communication apparatus may be the network device in any one of the second aspect or the possible designs of the second aspect, or a chip that implements a function of the network device.

According to a sixth aspect, a chip is provided. The chip includes a processing circuit and an input/output interface. The input/output interface is configured to communicate with a module outside the chip. For example, the chip may be a chip that implements a function of the network device in any one of the second aspect or the possible designs of the second aspect. The processing circuit is configured to run a computer program or instructions, to implement the method in any one of the second aspect or the possible designs of the second aspect.

According to a seventh aspect, a computer-readable storage medium is provided. The computer-readable storage medium stores instructions. When the instructions are run on a computer, the computer is enabled to perform the method in any one of the foregoing aspects.

According to an eighth aspect, a computer program product including instructions is provided. When the computer program product runs on a computer, the computer is enabled to perform the method in any one of the foregoing aspects.

According to a ninth aspect, a circuit system is provided. The circuit system includes a processing circuit, and the processing circuit is configured to perform the method in any one of the foregoing aspects.

According to a tenth aspect, a communication system is provided, including a terminal device and a network device. The terminal device is configured to perform the method in any one of the first aspect and the possible designs of the first aspect, and the network device is configured to perform the method in any one of the second aspect and the possible designs of the second aspect.

For technical effect brought by any design in the second aspect to the tenth aspect, refer to beneficial effect in the corresponding method provided above. Details are not described herein again.

### BRIEF DESCRIPTION OF DRAWINGS

FIG. 1 is a diagram of an architecture of a communication system according to an embodiment of this application;
FIG. 2 is a diagram of a scheduling scenario according to an embodiment of this application;
FIG. 3 is a diagram of a structure of a data frame according to an embodiment of this application;
FIG. 4 is a diagram of a communication protocol stack according to an embodiment of this application;
FIG. 5 is a diagram of a BSR format according to an embodiment of this application;
FIG. 6 is a diagram of another BSR format according to an embodiment of this application;
FIG. 7 is a diagram of another scheduling scenario according to an embodiment of this application;
FIG. 8 is a schematic flowchart of a logical channel grouping method according to an embodiment of this application;
FIG. 9 is a diagram of a logical channel group configuration according to an embodiment of this application;
FIG. 10 is a diagram of another logical channel group configuration according to an embodiment of this application;
FIG. 11 is a diagram of another scheduling scenario according to an embodiment of this application;
FIG. 12 is a diagram of another scheduling scenario according to an embodiment of this application;
FIG. 13 is a diagram of another scheduling scenario according to an embodiment of this application;
FIG. 14 is a diagram of another scheduling scenario according to an embodiment of this application;
FIG. 15 is a diagram of another scheduling scenario according to an embodiment of this application;
FIG. 16 is a diagram of another scheduling scenario according to an embodiment of this application;
FIG. 17 is a diagram of data frame mapping according to an embodiment of this application;
FIG. 18 is a diagram of another scheduling scenario according to an embodiment of this application;
FIG. 19 is a diagram of another scheduling scenario according to an embodiment of this application;
FIG. 20 is a diagram of another scheduling scenario according to an embodiment of this application;
FIG. 21 is a diagram of another scheduling scenario according to an embodiment of this application;
FIG. 22 is a diagram of another scheduling scenario according to an embodiment of this application;
FIG. 23 is a diagram of another scheduling scenario according to an embodiment of this application;
FIG. 24 is a diagram of another scheduling scenario according to an embodiment of this application;
FIG. 25 is a schematic flowchart of another logical channel grouping method according to an embodiment of this application;
FIG. 26 is a schematic flowchart of another logical channel grouping method according to an embodiment of this application;
FIG. 27 is a schematic flowchart of another logical channel grouping method according to an embodiment of this application; and
FIG. 28 is a diagram of a structure of a communication apparatus according to an embodiment of this application.

### DESCRIPTION OF EMBODIMENTS

The following describes technical solutions of this application with reference to accompanying drawings.

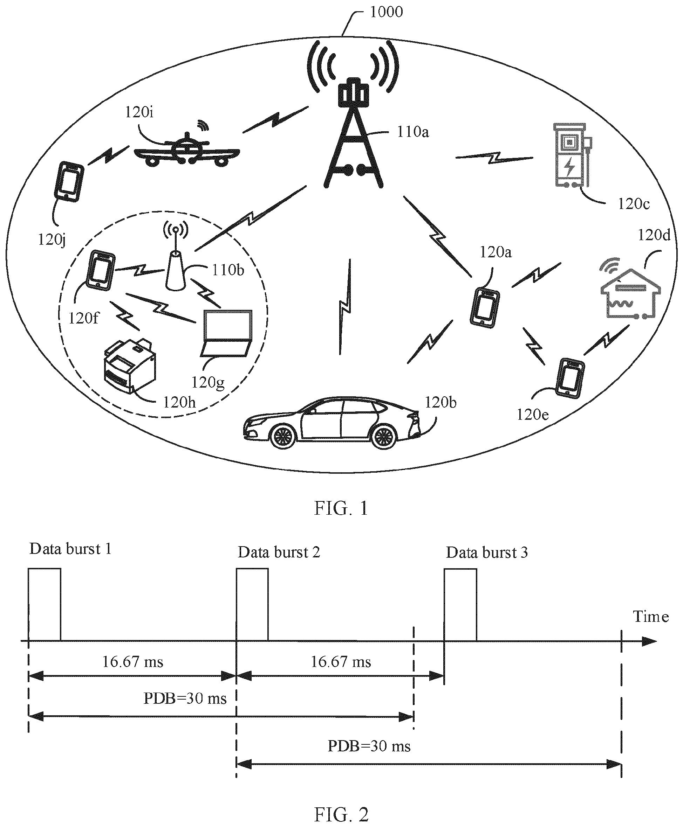

FIG. 1 is a diagram of an architecture of a communication system 1000 to which an embodiment of this application is applied. As shown in FIG. 1, the communication system 1000 includes at least one network device (for example, 110a and 110b in FIG. 1) and at least one terminal device (for example, 120a to 120j in FIG. 1). The terminal device is connected to the network device in a wireless manner. FIG. 1 is merely a diagram. The communication system may further include other network devices, for example, a wireless relay device and a wireless backhaul device (not shown in FIG. 1).

The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next-generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of a base station. For example, the network device may be a central unit (central unit, CU), or may be a distributed unit (distributed unit, DU). The CU herein completes functions of a radio resource control (radio resource control, RRC) protocol and a packet data convergence protocol (packet data convergence protocol, PDCP) of a base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete functions of a part of physical (physical, PHY) layers or all physical layers. For specific descriptions of the foregoing protocol layers, refer to related technical specifications of the 3rd generation partnership project (3rd generation partnership project, 3GPP). The network device may be a macro base station (for example, 110a in FIG. 1), or may be a micro base station or an indoor base station (for example, 110b in FIG. 1), or may be a relay node, a donor node, or the like. A specific technology and a specific device form that are used by the network device are not limited in embodiments of this application. For ease of description, the following uses the network device as an example for description.

The terminal device may also be referred to as a terminal, user equipment (user equipment, UE), a mobile station, a mobile terminal, or the like. The terminal device may be widely applied to various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, smart office, a smart wearable, smart transportation, and a smart city. The terminal device may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form that are used by the terminal device are not limited in embodiments of this application.

The network device and the terminal device may be at fixed locations, or may be movable. The network device and the terminal device may be deployed on land, including an indoor or outdoor device, a handheld device, or a vehicle-mounted device; or may be deployed on water; or may be deployed on an airplane, a balloon, and an artificial satellite in the air. Application scenarios of the network device and the terminal device are not limited in embodiments of this application.

Roles of the network device and the terminal device may be relative. For example, a helicopter or an unmanned aerial vehicle 120i in FIG. 1 may be configured as a mobile base station. For the terminal device 120j that accesses a radio access network through 120i, the terminal device 120i is a network device. However, for the network device 110a, 120i is a terminal device. In other words, 110a and 120i communicate with each other by using a radio air interface protocol. Certainly, 110a and 120i may alternatively communicate with each other by using an interface protocol between base stations. In this case, for 110a, 120i is also a network device. Therefore, both the network device and the terminal device may be collectively referred to as communication apparatuses. 110a and 110b in FIG. 1 may be referred to as communication apparatuses having functions of the network device, and 120a to 120j in FIG. 1 may be referred to as communication apparatuses having functions of the terminal device.

Communication between a network device and a terminal device, communication between network devices, and communication between terminal devices may be performed via a licensed spectrum, or may be performed via an unlicensed spectrum, or may be performed via both a licensed spectrum and an unlicensed spectrum. Communication may be performed via a spectrum below 6 gigahertz (gigahertz, GHz), or communication may be performed via a spectrum above 6 GHz, or communication may be performed via both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as the smart grid, industrial control, smart transportation, and the smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel; and the terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When communicating with the serving cell, the terminal device is further interfered with by a signal from a neighboring cell.

For ease of understanding embodiments of this application, the following first briefly describes terms in embodiments of this application. It should be understood that these descriptions are merely for ease of understanding of embodiments of this application, and shall not constitute any limitation on this application.

### 1. Extended reality (extended reality, XR)

XR refers to a real-and-virtual combined and human-machine interaction environment generated by using a computer technology and a wearable device. XR is proposed based on augmented reality (augmented reality, AR), virtual reality (virtual reality, VR), and mixed reality (mixed reality, MR). In other words, to avoid concept confusion, XR is actually a general term, including AR, VR, and MR. An XR service aims to use a high-speed network and a technology like 360-degree imaging, to achieve interactive immersive experience effect. The XR service has the following characteristics: a large service volume, a high transmission latency requirement (that is, a transmission latency needs to be reduced as much as possible), a short data frame arrival interval, an obvious service periodicity, or the like.

In a scenario in which a network device transmits a data frame of an XR or XR-like service to a terminal device, when a data frame rate is 60 frames per second (frame per second, fps), an average arrival time interval between service data corresponding to two adjacent data frames is 16.6666... ms (approximately equal to 16.67 ms). It should be understood that the data frame is defined from a perspective of an application layer, and one data frame may be replaced with one video frame. One protocol data unit set (protocol data unit set, PDU set) includes service data in one data frame (frame). The PDU set is defined from a perspective of a MAC layer, and one data frame may also be replaced with one PDU set.

For example, one PDU set includes service data of one video frame (frame) of the XR service. A data volume of one PDU set is large, and one PDU set is usually split into dozens to hundreds of packets for transmission. A packet of a PDU set is generated in a form of a data burst (data burst). To be specific, there is no packet in a time period. Once there is a packet, a large quantity of packets appear in a very short time. In addition, the video frame has a specific periodicity. For example, for a 60 fps XR video stream, a PDU set appears every 16.6666... ms (approximately equal to 16.67 ms). In other words, a data burst occurs every 16.6666... ms (approximately equal to 16.67 ms), as shown in FIG. 2.

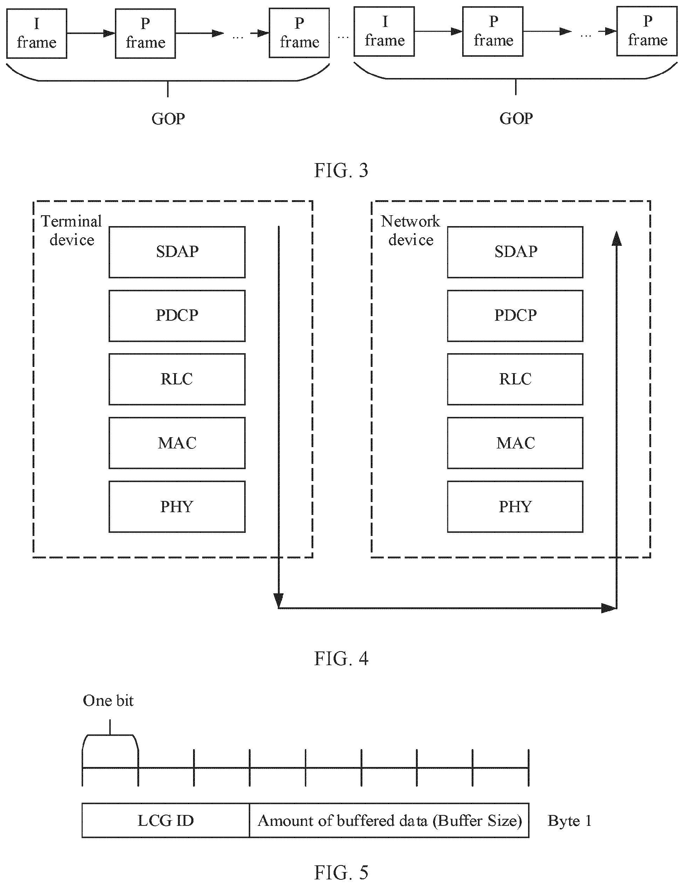

For example, a video frame is used as an example, and a data burst type includes an I type and a P type. The I type indicates that a video frame corresponding to the data burst is an I frame, and the P type indicates that a video frame corresponding to the data burst is a P frame. It may be easily understood that a video sequence of the XR service may be segmented into a plurality of groups of pictures (groups of pictures, GOPs). For example, each GOP may include a same quantity of video frames. In each GOP, a terminal device may perform intra-frame coding or inter-frame coding on each frame of image. As shown in FIG. 3, a first frame of image in each GOP may be referred to as an intra-frame coding frame (intra-frame coding frame). The intra-frame coding frame is referred to as an I frame for short, and may be independently encoded and decoded. Subsequent frames of images may be referred to as inter-frame coding frames (inter-frame coding frames), including a predictive frame (predictive frame) (P frame for short) and a bidirectional predictive frame (bidirectional predictive frame) (B frame for short). The inter-frame coding frame needs to be encoded and decoded based on a previously coded image, to improve encoding and decoding compression performance.

### 2. Packet delay budget (packet delay budget, PDB)

The PDB is a latency upper limit of transmitting a packet between a terminal device and a user plane network element, and represents a maximum transmission latency allowed for the packet. The user plane network element may be a user plane function (user plane function, UPF) network element that terminates an N6 interface in a 5G system.

The PDB may be divided into two parts: an access network (access network, AN) PDB (denoted as an AN PDB) and a core network (core network, CN) PDB (denoted as a CN PDB). The AN PDB is a latency upper limit of transmitting the packet between the terminal device and an access network device. The CN PDB is a latency upper limit of transmitting the packet between the access network device and the user plane network element. The PDB is equal to a sum of the AN PDB and the CN PDB.

A PDB of a data burst may be understood as a delay from a moment at which a packet arrives at a terminal device to a moment at which the packet is successfully sent to a network device. A packet that is not successfully transmitted to the network device beyond the PDB may be considered as an unwanted packet.

A video service in XR services is used as an example. A typical value of a PDB of an uplink video frame is 30 milliseconds (ms), and an optional value is 60 ms, 15 ms, 45 ms, or the like.

It may be easily understood that, in embodiments of this application, a unit of the PDB may be millisecond, for example, a dozen milliseconds or dozens of milliseconds. Certainly, the PDB may alternatively have another time unit. This is not limited in embodiments of this application. In addition, in embodiments of this application, the delay and the latency are equivalent, and may be replaced with each other. For example, the latency upper limit may also be described as a delay upper limit.

### 3. Protocol stack on a radio access network side

The protocol stack on the radio access network side may be classified into a user plane protocol stack and a control plane protocol stack. The user plane protocol stack may include an SDAP layer, a PDCP layer, an RLC layer, a MAC layer, a PHY layer, and the like. The PHY layer belongs to a first layer (also referred to as a layer 1 (layer 1, L1)), and the MAC layer, the RLC layer, the PDCP layer, and the SDAP layer belong to a second layer (also referred to as a layer 2 (layer 2, L2)). In addition, an RRC layer and a NAS layer of a control plane belong to a third layer (also referred to as a layer 3 (layer 3, L3)).

As shown in FIG. 4, in a user plane protocol stack, an SDAP layer is located above a PDCP layer, the PDCP layer is located above an RLC layer, the RLC layer is located above a MAC layer, and the MAC layer is located above a PHY layer. For an XR service, after service data arrives at a terminal device, the terminal device sequentially processes a packet at protocol layers in a top-to-bottom sequence shown in FIG. 4, and finally transmit a processed packet to a network device through an air interface. After receiving the packet through the air interface, the network device sequentially performs corresponding processing on the packet in a sequence opposite to that of the terminal device. Packet processing at each protocol layer is implemented by a multi-functional entity corresponding to the protocol layer. For details, refer to related technical specifications of 3GPP. Details are not described herein again. It may be easily understood that the user plane protocol stack shown in FIG. 4 does not constitute any limitation on the solutions of this application. In actual application, the user plane protocol stack may include more or fewer protocol layers than those shown in the figure.

Each layer of the protocol stack may have a plurality of protocol entities and a plurality of defined channel resources. The MAC layer is used as an example.

A logical channel (logical channel, LCH) is used by the MAC layer to provide a data transmission service. The logical channel is used to indicate carried content. A network device configures a transmission parameter set of the LCH for a terminal device. The transmission parameter set may include a parameter that can be used or that can be mapped by the LCH, for example, a subcarrier spacing, a cyclic prefix length, and a serving cell that is of the terminal device and that corresponds to an uplink resource.

A logical channel group (logical channel group, LCG) is a set including a plurality of LCHs, and is usually configured by a network device for a terminal device.

The uplink resource is used to transmit uplink data of the terminal device, for example, a resource of a physical uplink shared channel (physical uplink shared channel, PUSCH).

### 4. BSR

In a communication system, a terminal device may request uplink scheduling from a network device via a BSR. For example, the terminal device sends the BSR to the network device. Correspondingly, the network device receives the BSR from the terminal device. The BSR indicates an amount of to-be-reported buffered data of the terminal device. The network device allocates a corresponding quantity of uplink resources to the terminal device based on the amount of the buffered data indicated by the BSR.

BSR types are described as follows: In the communication system, there may be a plurality of types of BSRs, for example, a regular BSR (regular BSR), a periodic BSR (periodic BSR), or a padding BSR (padding BSR). In this application, the regular BSR is used as an example for description.

Triggering of the regular BSR is described as follows: The triggering of the regular BSR meets the following conditions: When one of the following cases is met, uplink data needs to be transmitted on a logical channel (logical channel, LCH) belonging to an LCG:
Case 1: The LCH has a higher priority level (priority level) than another LCH that has uplink data to be uploaded and that belongs to the same LCG. For example, an LCG 1 is used as an example. The LCG 1 includes four LCHs, which are respectively denoted as an LCH 5 to an LCH 8. Uplink data needs to be uploaded on one or more LCHs in the LCH 5, the LCH 6, and the LCH 7, but priority levels of the LCH 5, the LCH 6, and the LCH 7 are lower than a priority level of the LCH 8. When uplink data needs to be uploaded on the LCH 8, if the trigger condition in the case 1 is met, the terminal device triggers the regular BSR.
Case 2: There is no uplink data that needs to be uploaded on another LCH belonging to the LCG. For example, an LCG 1 is used as an example. The LCG 1 includes four LCHs, which are respectively denoted as an LCH 5 to an LCH 8. There is no uplink data that needs to be uploaded on the LCH 5, the LCH 6, and the LCH 7, but there is uplink data that needs to be uploaded on the LCH 8. In this case, if the trigger condition in the case 2 is met, the terminal device triggers the regular BSR.

A BSR format (format) is described as follows: The BSR format includes a short BSR format (short BSR format) and a long BSR format (long BSR format).

As shown in FIG. 5, a length of the short BSR format is fixed, and is 1 octet (which can also be called as byte). In the short BSR format, 3 bits (bits) are used to indicate a logical channel group identity (identity), that is, an LCG ID; and 5 bits are used to indicate an interval in which an amount of buffered data (buffer size) is located. A buffer size field indicates a sum of data volumes of buffered data of a logical channel group corresponding to an LCG ID field.

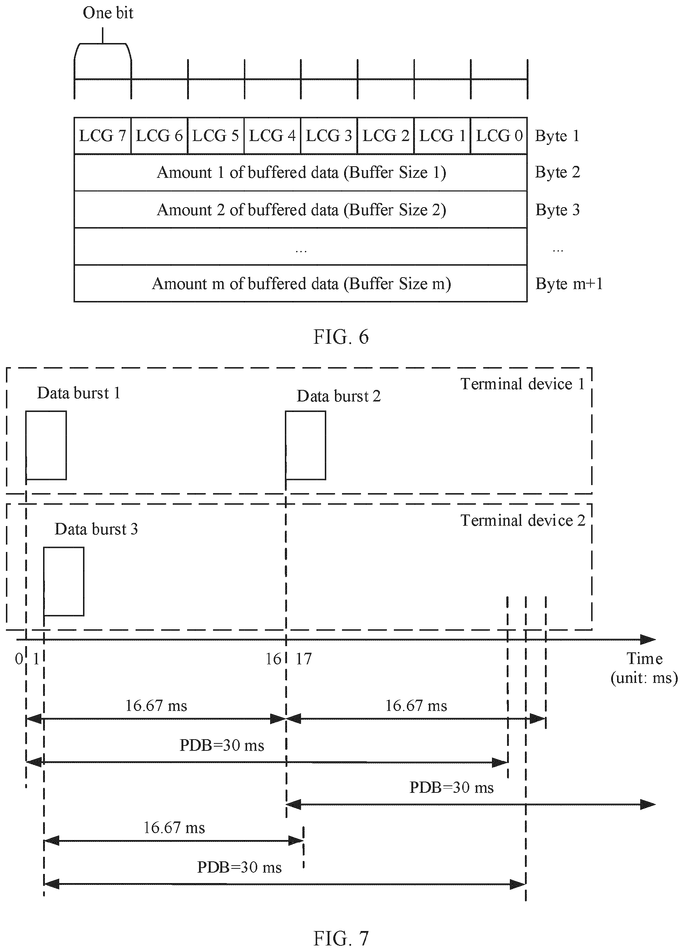

As shown in FIG. 6, a length of the long BSR format is not fixed, and the long BSR format may have a plurality of bytes. In the long BSR format, a first byte is a bitmap (bitmap), and each bit in the bitmap is used to indicate whether to report a buffer size of an LCG corresponding to the bit. A second byte or a byte after a second byte is used to indicate an interval in which an amount of buffered data is located. For example, if a value of an LCG_i is set to 1, it indicates that there is uplink data to be reported in the LCG_i; or if a value of an LCG_i is set to 0, it indicates that there is no uplink data to be reported in the LCG_i. An interval in which an amount of buffered data in each LCG_i in which data needs to be reported is located is indicated by using one byte.

In other words, in a BSR reporting mechanism, reporting is performed at a granularity of an LCG. One BSR may be used to report a data volume of uplink data corresponding to one or more LCGs.

However, uplink data in a buffer corresponding to an LCG may include a packet in one data burst, or may include packets in a plurality of data bursts. Therefore, at a moment, different data bursts correspond to different remaining PDBs (remaining PDBs). In this case, problems of low uplink scheduling efficiency and a decrease in an uplink capacity are likely to occur. For details, refer to the following descriptions in a case A and a case B.

Case A: After receiving the BSR, the network device allocates the uplink resource to the terminal device at an interval of a time period. As a result, a packet (or some packets) in a data burst cannot be transmitted within a PDB time range, and problems of low uplink scheduling efficiency and a low uplink capacity occur.

For example, as shown in FIG. 7, on a side of a terminal device 1, the terminal device 1 obtains a packet in a data burst 1 at a 0^{th} ms, and obtains a packet in a data burst 2 at a 16.67^{th} ms. In this case, uplink data in a buffer corresponding to an LCG 1 includes the packet in the data burst 1 and the packet in the data burst 2. K1 represents a data volume of the data burst 1 in the buffer corresponding to the LCG 1, and K2 represents a data volume of the data burst 2 in the buffer corresponding to the LCG 1.

On a side of a network device, after receiving a BSR, the network device does not immediately allocate an uplink resource to the terminal device 1. For example, the network device allocates the uplink resource to the terminal device 1 only at a 32^{nd} ms. In addition, the uplink resource allocated by the network device to the terminal device 1 at the 32^{nd} ms is an uplink resource determined based on a data volume K indicated by the BSR. At the 32^{nd} ms, the network device allocates the uplink resource beyond a PDB range corresponding to the packet in the data burst 1. In this case, the packet (some packets) is considered as an invalid packet. Consequently, an uplink capacity is low. In addition, the network device still allocates an uplink resource to the packet in the data burst 1, affecting uplink scheduling efficiency.

Case B: After the network device receives BSRs of at least two terminal devices, when uplink resources are insufficient, the network device may allocate an excessive uplink resource to a terminal device, and allocate an insufficient uplink resource to another terminal device. Consequently, problems of low uplink scheduling efficiency and a low uplink capacity occur.

For example, as shown in FIG. 7, on the side of the terminal device 1, for the terminal device 1, refer to the description in the case A. Details are not described herein again. A BSR sent by the terminal device 1 is denoted as a BSR 1, and a data volume indicated by the BSR 1 is denoted as K.

On a side of a terminal device 2, a packet in a data burst 3 is obtained at a 1st ms. In this case, uplink data in a buffer corresponding to an LCG 1 of the terminal device 2 includes the packet in the data burst 3. K3 represents a data volume of the data burst 3 in the buffer corresponding to the LCG 1 of the terminal device 2. Correspondingly, a BSR sent by the terminal device 2 is denoted as a BSR 2, and a data volume indicated by the BSR 2 is denoted as K3.

On the side of the network device, after receiving the BSR 1 and the BSR 2, the network device allocates uplink resources to the terminal device 1 and the terminal device 2 only at a 12^{th} ms. In addition, uplink resources are insufficient at a 28^{th} ms. The network device allocates an uplink resource to the terminal device 1. The uplink resource allocated to the terminal device 1 is determined based on the data volume K indicated by the BSR 1, and can be used by the terminal device 1 to upload the packet in the data burst 1 and the packet in the data burst 2. However, an uplink resource allocated by the network device to the terminal device 2 is insufficient, or there is no uplink resource used by the terminal device 2 to report the packet in the data burst 3.

However, at the 28^{th} ms, a remaining PDB corresponding to the packet in the data burst 1 is 2 ms, a remaining PDB corresponding to the packet in the data burst 2 is approximately 18.67 (that is, 30-(28-16.67)) ms, and a remaining PDB corresponding to the packet in the data burst 3 is 3 ms. In this way, an uplink resource is not allocated to the packet in the data burst 3 of the terminal device 2 in time, and the uplink resource is easily allocated beyond a PDB range corresponding to the packet. Consequently, an uplink capacity is low, and uplink scheduling efficiency is reduced.

In conclusion, although the BSR can indicate an interval in which a data volume of to-be-reported uplink data is located, the BSR cannot indicate a remaining PDB. Therefore, when the network device allocates the uplink resource based on the interval in which the data volume indicated by the BSR is located, problems of low uplink scheduling efficiency and a low uplink capacity are likely to occur.

In view of this, an embodiment of this application provides a logical channel grouping method. The method may be applied to the communication system in FIG. 1. In the logical channel grouping method provided in this embodiment of this application, a terminal device determines that to-be-reported buffered data exists on a first logical channel LCH. Then, the terminal device sends a buffer status report BSR to a network device according to a preset configuration rule and based on the to-be-reported buffered data on the first LCH. The BSR indicates a first data volume and a first logical channel group LCG, the first data volume corresponds to the first LCG, the first data volume includes a data volume of first data, the buffered data includes the first data, and the first LCG is one of at least one LCG configured for the first LCH.

In a possible case, a remaining packet delay budget PDB of the first data is within a first remaining PDB range. The configuration rule includes a configuration rule 1:
L LCGs and L remaining PDB ranges, where the L LCGs include the first LCG, the L remaining PDB ranges include the first remaining PDB range, the first LCG is associated with the first remaining PDB range, and L is a positive integer greater than or equal to 2.

Alternatively, in another possible case, a priority level of the first data is within a first priority level range, and the priority level of the first data is determined based on a remaining PDB of the first data and a data type of the first data. The configuration rule includes a configuration rule 2:
L LCGs and L priority level ranges, where the L LCGs include the first LCG, the L priority level ranges include the first priority level range, the first LCG is associated with the first priority level range, and L is a positive integer greater than or equal to 2.

In other words, when the BSR indicates the first data volume and the first LCG, according to the preset configuration rule 1, when the first LCG is associated with the first remaining PDB range, the network device allocates an uplink resource to the terminal device based on the first remaining PDB range and the first data volume. For example, when a remaining PDB corresponding to the first remaining PDB range is small, the network device preferentially allocates an uplink resource to data corresponding to the first data volume; or when a remaining PDB corresponding to the first remaining PDB range is large, the network device may allocate an uplink resource to data corresponding to the first data volume later, and preferentially allocate an uplink resource to another terminal device. This improves uplink scheduling efficiency and an uplink capacity. Alternatively, according to the preset configuration rule 2, when the first LCG is associated with the first priority level range, the network device allocates an uplink resource to the terminal device based on the first priority level range and the first data volume. For example, when a priority level corresponding to the first priority level range is low, the network device preferentially allocates an uplink resource to data corresponding to the first data volume; or when a priority level corresponding to the first priority level range is high, the network device may allocate an uplink resource to data corresponding to the first data volume later, and preferentially allocate an uplink resource to another terminal device. This improves uplink scheduling efficiency and an uplink capacity.

It should be understood that names of messages between devices, names of parameters in the messages, or the like in the following embodiments of this application are merely examples, and may be other names in specific implementation. This is not specifically limited in embodiments of this application.

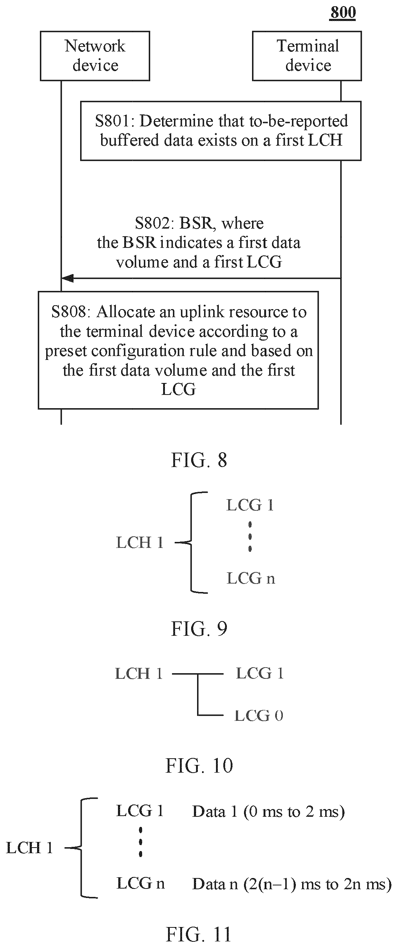

The following describes in detail the logical channel grouping method provided in embodiments of this application with reference to FIG. 8 to FIG. 27. A logical channel grouping method 800 provided in an embodiment of this application includes the following steps.

S801: A terminal device determines that to-be-reported buffered data exists on a first LCH.

For example, the first LCH is any logical channel for transmitting XR service data. For example, the first LCH is denoted as an LCH 1.

For example, in terms of a data type, the buffered data on the first LCH includes data of an I-frame in an XR service, or the buffered data on the first LCH includes data of a P-frame in an XR service.

For another example, in terms of a data burst, the buffered data on the first LCH includes packets in a same data burst. In this case, the buffered data on the first LCH has a same remaining PDB, in other words, there is one remaining PDB of the buffered data on the first LCH. Alternatively, the buffered data on the first LCH includes packets in different data bursts. In this case, the buffered data on the first LCH has different remaining PDBs, in other words, there are at least two remaining PDBs of the buffered data on the first LCH.

S802: The terminal device sends a BSR to a network device according to a preset configuration rule and based on the to-be-reported buffered data on the first LCH. Correspondingly, the network device receives the BSR from the terminal device.

The preset configuration rule includes a configuration rule 1 and/or a configuration rule 2. For example, the configuration rule 1 and the configuration rule 2 are described as follows:
The configuration rule 1 indicates L LCGs and L remaining PDB ranges, where the L LCGs include a first LCG, the L remaining PDB ranges include a first remaining PDB range, the first LCG is associated with the first remaining PDB range, and L is a positive integer greater than or equal to 2.

For example, there is a one-to-one correspondence between the L LCGs and the L remaining PDB ranges. For example, an i^{th} LCG in the L LCGs is associated with an i^{th} remaining PDB range in the L remaining PDB ranges, where i is any positive integer less than or equal to L. For example, when L is a positive integer greater than or equal to 2, the configuration rule 1 further indicates that a second LCG is associated with a second remaining PDB range. The L LCGs include the second LCG, and the L remaining PDB ranges include the second remaining PDB range. It may be easily understood that the second LCG may be any LCG other than the first LCG in the L LCGs.

Table 1 is used as an example. Table 1 shows a correspondence between an LCG and a remaining PDB range.

**Table 1**

| LCG ID | Remaining PDB range (unit: ms) |
|---|---|
| 0 | 0 to 2 |
| 1 | 2 to 4 |
| ... | ... |
| 7 | 14 to 16 |

As shown in Table 1, when the LCG ID=0, a remaining PDB range corresponding to an LCG 0 is 0 ms to 2 ms. When the LCG ID=1, a remaining PDB range corresponding to an LCG 1 is 2 ms to 4 ms. A case in which the LCG ID is another value may follow the same rule. Details are not described again. It should be understood that, in Table 1, the correspondence between the LCG and the remaining PDB range is described by using an example in which a value of the LCG ID ranges from 0 to 7, that is, L=8. Certainly, L may alternatively have another value, for example, L=4. This is not limited in embodiments of this application.

It may be easily understood that the first LCG and the second LCG may be different LCGs in Table 1. The first remaining PDB range and the second remaining PDB range may be different remaining PDB ranges in Table 1.

In some embodiments, the first remaining PDB range may be determined based on a PDB threshold. For example, the first remaining PDB range is [0, T), and the second remaining PDB range is [T, Pmax], where T represents the PDB threshold, and Pmax represents a maximum transmission latency allowed for the buffered data. For example, T=2 ms, and Pmax=30 ms. Table 2 is used as an example. Table 2 shows another correspondence between the LCG and the remaining PDB range.

**Table 2**

| LCG ID | Remaining PDB range (unit: ms) |
|---|---|
| 0 | 0 to T |
| 1 to 7 | T to Pmax |

As shown in Table 2, when the LCG ID=0, a remaining PDB range corresponding to an LCG 0 is 0 ms to T ms. When the LCG ID is any value in 1 to 7, a remaining PDB range corresponding to an LCG is T to Pmax. It may be easily understood that Table 2 may be replaced with Table 3.

**Table 3**

| LCG ID | Remaining PDB range (unit: ms) |
|---|---|
| 0 | Less than T |

As shown in Table 3, when the LCG ID=0, a remaining PDB range corresponding to an LCG 0 is 0 ms to T ms. For the terminal device, the terminal device determines, based on Table 3, that remaining PDB ranges corresponding to other LCGs (for example, LCG 1 to LCG 7) are T to Pmax.

It may be easily understood that the first LCG may be the LCG 0 in Table 2 (or Table 3), and the second LCG may be any one of the LCG 1 to the LCG 7 in Table 2.

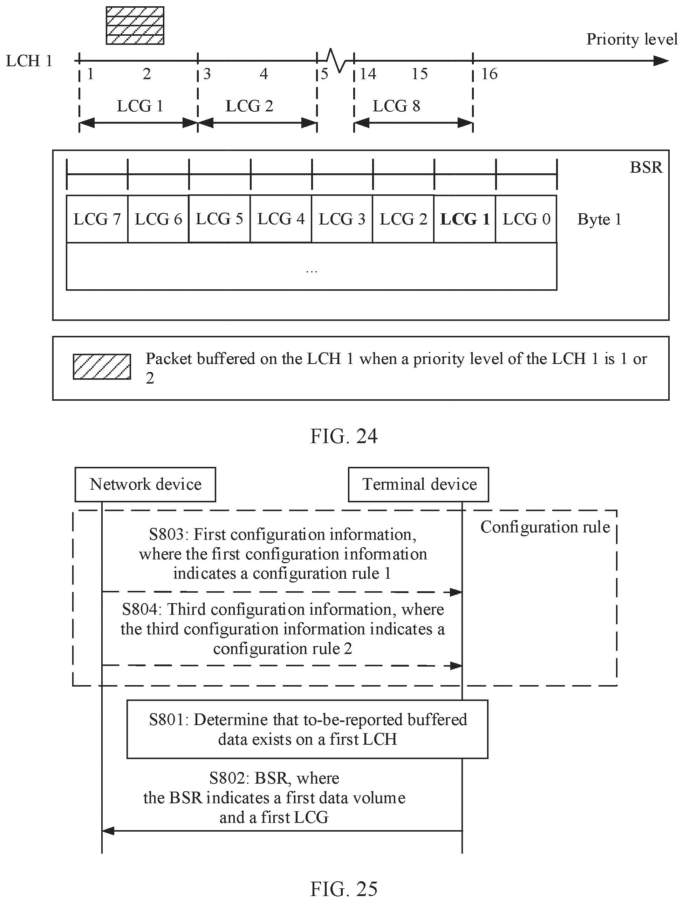

It may be easily understood that the configuration rule 1 may be preconfigured information, or may be configured by the network device for the terminal device. Specifically, as shown in FIG. 25, the logical channel grouping method in this embodiment of this application further includes S803.

S803: The network device sends first configuration information to the terminal device. Correspondingly, the terminal device receives the first configuration information from the network device.

The first configuration information indicates the configuration rule 1. For example, the first configuration information may be information in LogicalChannelConfig.

For example, when the configuration rule 1 is shown in Table 1, it may be understood that the first configuration information is used to configure the L LCGs and the L remaining PDB ranges, and correspondences between the L LCGs and the L remaining PDB ranges.

For another example, when the configuration rule 1 is shown in Table 2 (or Table 3), it may be understood that the first configuration information is used to configure the first LCG.

It should be understood that S803 is performed before S801, so that the terminal device sends the BSR (in S802) based on a configuration in S803. In other words, the L LCGs in the configuration rule 1 include the first LCG in S802, and the L remaining PDB ranges in the configuration rule 1 include the first remaining PDB range in S802.

The configuration rule 2 indicates L LCGs and L priority level ranges, where the L LCGs include a first LCG, the L priority level ranges include a first priority level range, the first LCG is associated with the first priority level range, and L is a positive integer greater than or equal to 2.

For example, there is a one-to-one correspondence between the L LCGs and the L priority level ranges. For example, an i^{th} LCG in the L LCGs is associated with an i^{th} priority level range in the L priority level ranges, where i is any positive integer less than or equal to L. For example, when L is a positive integer greater than or equal to 2, the configuration rule 2 further indicates that a second LCG is associated with a second priority level range. The L LCGs include the second LCG, and the L priority level ranges include the second priority level range. In this embodiment of this application, a priority level is determined based on a data type of buffered data on any LCH and a remaining PDB of the buffered data on the LCH. It may be easily understood that the second LCG may be any LCG other than the first LCG in the L LCGs.

Table 4 is used as an example. Table 4 shows a correspondence between an LCG and a priority level range.

**Table 4**

| LCG ID | Priority level range (priority level range) |
|---|---|
| 0 | 1 to 2 |
| 1 | 3 to 4 |
| ... | ... |
| 7 | 15 to 16 |

As shown in Table 4, when the LCG ID=0, a priority level range corresponding to an LCG 0 is 1 to 2. When the LCG ID=1, a priority level range corresponding to an LCG 1 is 3 to 4. A case in which the LCG ID is another value may follow the same rule. Details are not described again. It should be understood that, in Table 4, the correspondence between the LCG and the priority level range is described by using an example in which a value of the LCG ID ranges from 0 to 7, that is, L=8. Certainly, L may alternatively have another value, for example, L=4. This is not limited in embodiments of this application.

It may be easily understood that the first LCG and the second LCG may be different LCGs in Table 4. The first priority level range and the second priority level range may be different priority level ranges in Table 4.

In some embodiments, the first priority level range may be determined based on a priority level threshold. For example, the first priority level range is [0, K), and the second priority level range is [K, Kmax], where K represents the priority level threshold, and Kmax represents a lowest priority level that may exist in the buffered data. For example, K=2, and Kmax=16. Table 5 is used as an example. Table 5 shows another correspondence between the LCG and the priority level range.

**Table 5**

| LCG ID | Priority level range (priority level range) |
|---|---|
| 0 | 1 to K |
| 1 to 7 | K to Kmax |

As shown in Table 5, when the LCG ID=0, a priority level range corresponding to an LCG 0 is 1 to K. When the LCG ID is any value in 1 to 7, a priority level range corresponding to an LCG is K to Kmax. It may be easily understood that Table 5 may be replaced with Table 6.

**Table 6**

| LCG ID | Priority level range (priority level range) |
|---|---|
| 0 | Less than K |

As shown in Table 6, when the LCG ID=0, a priority level range corresponding to an LCG 0 is 1 to K. For the terminal device, the terminal device determines, based on Table 6, that priority level ranges corresponding to other LCGs (for example, LCG 1 to LCG 7) are K to Kmax.

It may be easily understood that the first LCG may be the LCG 0 in Table 5 (or Table 6), and the second LCG may be any one of the LCG 1 to the LCG 7 in Table 5.

It may be easily understood that the configuration rule 2 may be preconfigured information, or may be configured by the network device for the terminal device. Specifically, as shown in FIG. 25, the logical channel grouping method in this embodiment of this application further includes S804.

S804: The network device sends third configuration information to the terminal device. Correspondingly, the terminal device receives the third configuration information from the network device.

The third configuration information indicates the configuration rule 2. For example, the third configuration information may be information in Logical Channel Config.

For example, when the configuration rule 2 is shown in Table 4, it may be understood that the third configuration information is used to configure the L LCGs and the L priority level ranges, and correspondences between the L LCGs and the L priority level ranges.

For another example, when the configuration rule 2 is shown in Table 5 (or Table 6), it may be understood that the third configuration information is used to configure the first LCG.

It should be understood that S804 is performed before S801, so that the terminal device sends the BSR (in S802) based on a configuration in S804. In other words, the L LCGs in the configuration rule 2 include the first LCG in S802, and the L priority level ranges in the configuration rule 2 include the first priority level range in S802.

The BSR in S802 is described as follows:
The BSR indicates a first data volume and the first LCG. For example, when the BSR is shown in FIG. 5, an LCG ID field indicates the first LCG, and a buffer size field indicates the first data volume. For another example, when the BSR is shown in FIG. 6, one bit in a byte 1 indicates the first LCG, and one byte in a byte 2 to a byte m+1 indicates the first data volume.

The first data volume indicated by the BSR corresponds to the first LCG. For example, the first data volume is a data volume of data in a buffer corresponding to the first LCG.

The first data volume indicated by the BSR includes a data volume of first data, and the buffered data on the first LCH includes the first data (which may be understood as that the first data is all or a part of the buffered data on the first LCH). For example, the first LCH is denoted as the LCH 1. When the first LCG includes the LCH 1 and does not include another LCH, the data in the buffer corresponding to the first LCG is first data in buffered data on the LCH 1. Correspondingly, the first data volume is the data volume of the first data. When the first LCG includes both the LCH 1 and another LCH, the data in the buffer corresponding to the first LCG includes both first data in buffered data on the LCH 1 and buffered data on the another LCH. Correspondingly, the first data volume is greater than the data volume of the first data. The first data may be all or the part of the buffered data on the first LCH. For details, refer to descriptions of the following implementations 1 to 10. Details are not described herein.

The first LCG is one of at least one LCG configured for the first LCH. For example, the LCG configured for the first LCH is described in detail by using two configuration cases (the following configuration case 1 and configuration case 2).

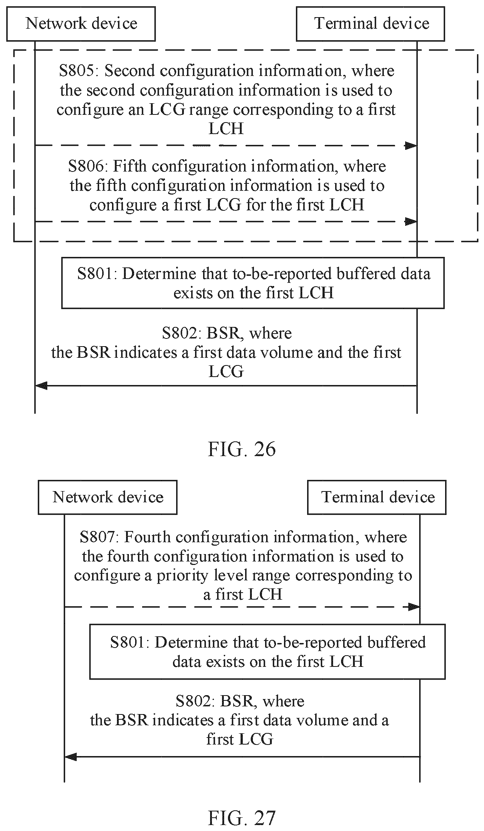

Configuration case 1: The network device configures a plurality of LCGs for each LCH of the terminal device. The first LCH is used as an example. As shown in FIG. 26, the logical channel grouping method in this embodiment of this application further includes S805.

S805: The network device sends second configuration information to the terminal device. Correspondingly, the terminal device receives the second configuration information from the network device.

The second configuration information is used to configure an LCG range corresponding to the first LCH. For example, the LCG range configured by using the second configuration information includes all or a part of the L LCGs. The first LCH may be dynamically adjusted within the LCG range corresponding to the first LCH. For example, at a moment 1, an LCG to which the first LCH belongs is an LCG 1, and at a moment 2, an LCG to which the first LCH belongs is an LCG 2. For details, refer to descriptions of the following implementations 1 to 3. Details are not described herein.

For example, the second configuration information may be information in LogicalChannelConfig, for example, logicalChannelGroupRange:SEQUENCE (SIZE (1...8)) OF INTEGER(0...maxLCG-ID).

Table 1 (or Table 4) is used as an example. The LCG range configured for the first LCH by using the second configuration information is denoted as (0, 7). In other words, the first LCH may be dynamically adjusted between eight LCGs (namely, the LCG 0 to the LCG 7).

FIG. 9 is used as an example. The LCG range configured for the first LCH (denoted as the LCH 1) by using the second configuration information is denoted as (1, n). In other words, the first LCH may be dynamically adjusted between n LCGs (namely, an LCG 1 to an LCG n).

It may be easily understood that S805 is performed before S801, and S803 (or S804) and S805 may be simultaneously performed. For example, the first configuration information and the second configuration information are sent via a same message. Alternatively, the network device first performs S803 (or S804), and then performs S805. This is not limited in embodiments of this application. In S805, the first LCH is used as an example for description. When the terminal device has another LCH, for example, a second LCH that is also used to transmit the XR service data, the network device also configures an LCG range for the second LCH.

Configuration case 2: In addition to configuring a normal LCG, the network device further configures an additional LCG for each LCH of the terminal device. In the configuration case 2, the LCG additionally configured for each LCH is denoted as the first LCG, and the LCG normally configured for each LCH is denoted as the second LCG. The first LCH is used as an example. As shown in FIG. 26, the logical channel grouping method in this embodiment of this application further includes S806.

S806: The network device sends fifth configuration information to the terminal device. Correspondingly, the terminal device receives the fifth configuration information from the network device.

The fifth configuration information is used to configure the first LCG for the first LCH. For example, Table 2 (or Table 3) is used as an example. The first LCG configured by using the fifth configuration information is the LCG 0, so that the terminal device reports, via the LCG 0, a data volume of data whose remaining PDB is less than the PDB threshold in the buffered data (on the first LCH). For another example, Table 5 (or Table 6) is used as an example. The first LCG configured by using the fifth configuration information is the LCG 0, so that the terminal device reports, via the LCG 0, a data volume of data whose priority level is less than the priority level threshold in the buffered data (on the first LCH).

For example, the fifth configuration information may be information in LogicalChannelConfig.

Table 2 (or Table 3, Table 5, or Table 6) is used as an example. The first LCG configured for the first LCH by using the fifth configuration information is denoted as the LCG 0.

FIG. 10 is used as an example. The first LCG configured for the first LCH (denoted as the LCH 1) by using the fifth configuration information is denoted as an LCG 0. In addition, in FIG. 10, the second LCG normally configured for the first LCH (denoted as the LCH 1) is denoted as an LCG 1.

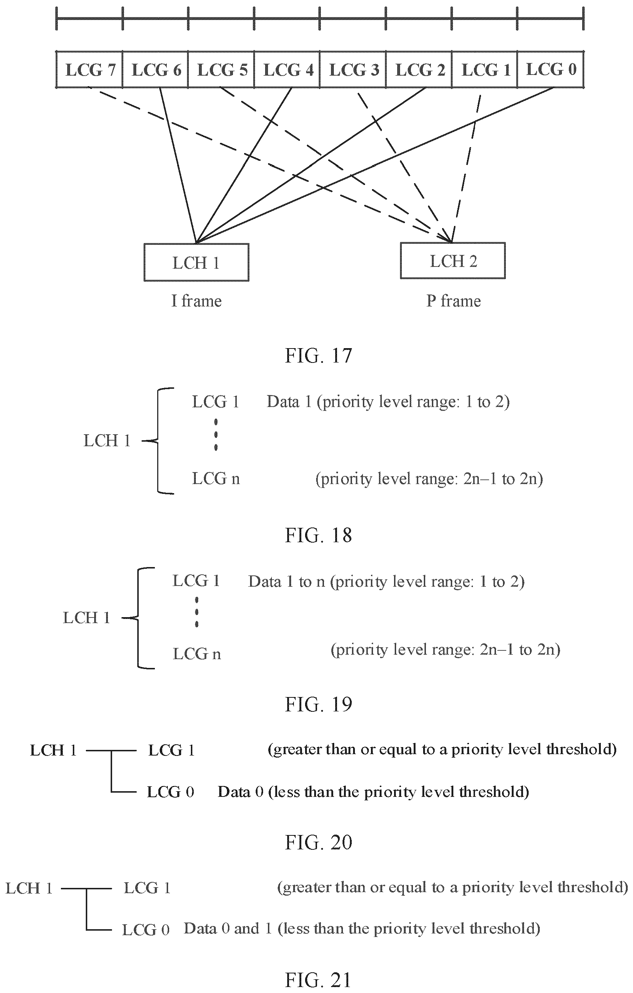

It may be easily understood that S806 is performed before S801, and S803 (or S804) and S806 may be simultaneously performed. For example, the first configuration information and the fifth configuration information are sent via a same message. Alternatively, the network device first performs S803 (or S804), and then performs S806. This is not limited in embodiments of this application. In S806, the first LCH is used as an example for description. When the terminal device has another LCH, for example, a second LCH that is also used to transmit the XR service data, the network device also additionally configures an LCG for the second LCH. The LCG additionally configured for the first LCH is different from the LCG additionally configured for the second LCH. FIG. 17 is used as an example. When the first LCH is an LCH 1, and the second LCH is an LCH 2, normal LCGs configured for the first LCH include an LCG 2, an LCG 4, and an LCG 6, and an LCG (namely, the first LCG) additionally configured for the first LCH is an LCG 0; and normal LCGs configured for the second LCH include an LCG 3, an LCG 5, and an LCG 7, and an LCG additionally configured for the second LCH is an LCG 1.

It should be understood that a combination relationship between the two configuration rules (the configuration rule 1 and the configuration rule 2) and the two configuration cases (the configuration case 1 and the configuration case 2) is described as follows: When a configuration case of each LCH is the configuration case 1, a used configuration rule is shown in Table 1 in the configuration rule 1, or is shown in Table 4 in the configuration rule 2. When a configuration case of each LCH is the configuration case 2, a used configuration rule is shown in Table 2 (or Table 3) in the configuration rule 1, or is shown in Table 5 (or Table 6) in the configuration rule 2.

The following describes the first data with reference to the foregoing two configuration rules (for example, the configuration rule 1 and the configuration rule 2).

In a first possible implementation, the configuration rule in S802 includes the configuration rule 1. In this case, a remaining PDB of the first data is within the first remaining PDB range. For details, refer to descriptions of Example 1 and Example 2.

### Example 1

In Example 1, a configuration case of the first LCH is the configuration case 1. Correspondingly, a used configuration rule is shown in Table 1 in the configuration rule 1. The following provides descriptions by using three implementations (that is, the following implementation 1 to implementation 3).

In the implementation 1 in the configuration case 1, there are at least two remaining PDBs of the buffered data on the first LCH, and the buffered data on the first LCH is reported via different LCGs.

Specifically, when the first LCG is associated with the first remaining PDB range, and the buffered data on the first LCH further includes second data, the BSR indicates not only the first data volume and the first LCG, but also a second data volume and the second LCG. The first data volume corresponds to the first LCG, the first data volume includes the data volume of the first data, and the remaining PDB of the first data is within the first remaining PDB range. The second data volume corresponds to the second LCG, the second data volume includes a data volume of the second data, and a remaining PDB of the second data is within the second remaining PDB range.

For example, when the buffered data on the first LCH includes packets in different data bursts, the buffered data on the first LCH has different remaining PDBs at a moment.

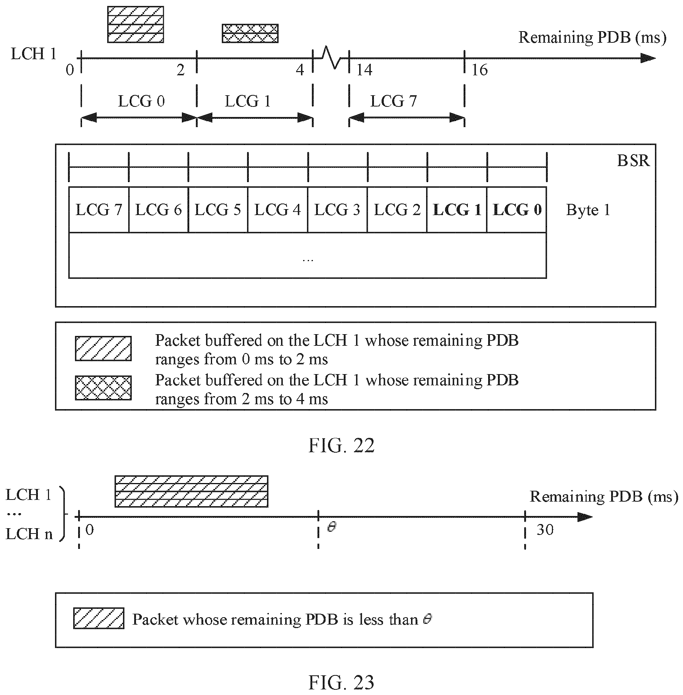

For example, with reference to Table 1 and FIG. 22 and still based on an example in which the first LCH is the LCH 1, in the buffered data on the LCH 1, a remaining PDB of a part of data (for example, denoted as data 0) is 1 ms, and a remaining PDB range of the remaining PDB is denoted as a remaining PDB range 1, for example, 0 ms to 2 ms; and a remaining PDB of the other part of data (for example, denoted as data 1) is 3 ms, and a remaining PDB range of the remaining PDB is denoted as a remaining PDB range 2, for example, 2 ms to 4 ms. In this case, the BSR indicates the following four items: an LCG 0, a data volume 0, an LCG 1, and a data volume 1. In other words, a data volume of the data 0 on the LCH 1 is reported via the LCG 0, for example, the data volume 0 corresponding to the LCG 0 includes a data volume of the data 1; and the data volume of the data 1 on the LCH 1 is reported via the LCG 1, for example, the data volume 1 corresponding to the LCG 1 includes a data volume of data 2.

For example, with reference to FIG. 11 and still based on an example in which the first LCH is the LCH 1, in the buffered data on the LCH 1, a remaining PDB of a part of data (for example, denoted as data 1) is 1 ms, and a remaining PDB range of the remaining PDB is denoted as a remaining PDB range 1, for example, 0 ms to 2 ms; a remaining PDB of another part of data (for example, denoted as data 2) is 3 ms, and a remaining PDB range of the remaining PDB is denoted as a remaining PDB range 2, for example, 2 ms to 4 ms; and a remaining PDB of still another part of data (for example, denoted as data n) is 2n-1 milliseconds, and a remaining PDB range of the remaining PDB is denoted as a remaining PDB range n, for example, 2(n-1) milliseconds to 2n milliseconds. In this case, the BSR indicates the following 2n items: an LCG 1 and a data volume 1, an LCG 2 and a data volume 2, ..., and an LCG n and a data volume n. In other words, a data volume of the data 1 on the LCH 1 is reported via the LCG 1, for example, the data volume 1 corresponding to the LCG 1 includes the data volume of the data 1; a data volume of the data 2 on the LCH 1 is reported via the LCG 2, for example, the data volume 2 corresponding to the LCG 2 includes the data volume of the data 2; ...; and a data volume of data n on the LCH 1 is reported via the LCG n, for example, the data volume n corresponding to the LCG n includes the data volume of the data n.

It may be easily understood that the remaining PDB range 1 may be considered as the first remaining PDB range, and each of the remaining PDB range 2 to the remaining PDB range n is considered as the second remaining PDB range. For an indication status of the BSR, refer to the descriptions of the first data volume, the first LCG, the second data volume, and the second LCG in the implementation 1. Details are not described herein again.

It may be easily understood that, based on the remaining PDB, the buffered data on the first LCH may be allocated to a smaller remaining PDB range. For example, the buffered data on the first LCH is allocated to one remaining PDB range denoted as a remaining PDB range 1. In this case, the remaining PDB range 1 may be considered as the first remaining PDB range. For an indication status of the BSR, refer to the descriptions of the first data volume and the first LCG in the implementation 1. Details are not described herein again.

In other words, even if the buffered data on the first LCH includes data of different remaining PDBs, the terminal device determines, based on the remaining PDBs, the at least one LCG indicated by the BSR. In this way, after receiving the BSR, the network device may learn of at least one data volume, at least one remaining PDB range, and a correspondence between a data volume and a remaining PDB range, to properly allocate an uplink resource. For example, when a remaining PDB indicated by a remaining PDB range is small, the network device preferentially allocates an uplink resource based on a data volume corresponding to the remaining PDB range. For another example, when a remaining PDB indicated by a remaining PDB range is large, and a transmission resource is insufficient, the network device may allocate an uplink resource later based on a data volume corresponding to the remaining PDB range, and may preferentially allocate an uplink resource to a data volume corresponding to a small remaining PDB, to improve uplink scheduling efficiency.

In the implementation 2 in the configuration case 1, there is one remaining PDB of the buffered data on the first LCH, and the buffered data on the first LCH is reported via one LCG.

Specifically, when the first LCG is associated with the first remaining PDB range, and the buffered data on the first LCH includes a packet in a data burst, there is one remaining PDB of the buffered data on the first LCH at a moment. When the remaining PDB of the buffered data on the first LCH is within the first remaining PDB range, the buffered data on the first LCH is the first data, in other words, the buffered data on the first LCH is equivalent to the first data. It may be understood that the first data is all of the buffered data on the first LCH. Correspondingly, the BSR indicates the first data volume and the first LCG, where the first data volume corresponds to the first LCG, the first data volume includes the data volume of the first data, and the remaining PDB of the first data is within the first remaining PDB range.

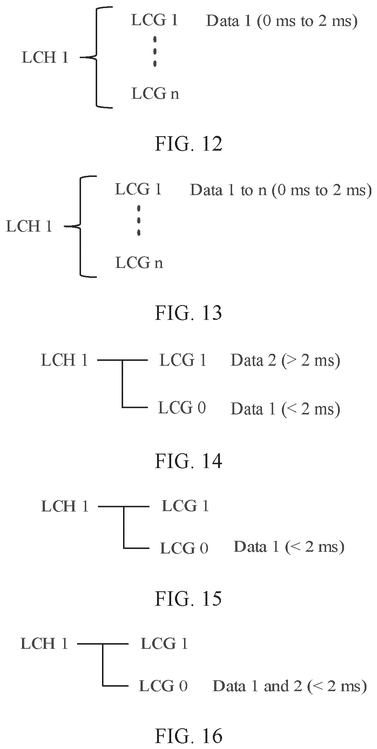

For example, with reference to FIG. 12 and still based on an example in which the first LCH is the LCH 1, at the moment 1, a remaining PDB of all buffered data (for example, denoted as data 1) on the LCH 1 is 1 ms, and a remaining PDB range of the remaining PDB is denoted as a remaining PDB range 1, for example, 0 ms to 2 ms. In this case, the BSR indicates the following two items: an LCG 1 and a data volume 1. In other words, a data volume of the buffered data (namely, the data 1) on the LCH 1 is reported via the LCG 1, for example, the data volume 1 corresponding to the LCG 1 includes a data volume of all of the buffered data on the LCH 1. At the moment 2, a remaining PDB of all buffered data on the LCH 1 (for example, denoted as data 1) is 3 ms, and a remaining PDB range of the remaining PDB is denoted as a remaining PDB range 2, for example, 2 ms to 4 ms, which is not shown in FIG. 12. In this case, the BSR indicates the following two items: an LCG 2 and a data volume 2. In other words, a data volume of the buffered data (namely, the data 1) on the LCH 1 is reported via the LCG 2, for example, the data volume 2 corresponding to the LCG 2 includes a data volume of all of the buffered data on the LCH 1.

In other words, when the buffered data on the first LCH has a same remaining PDB, the terminal device reports a data volume of the buffered data via one LCG (namely, the first LCG). In this way, after receiving the BSR, the network device may learn of a data volume and a remaining PDB range to allocate an uplink resource, so that the terminal device uploads the buffered data on the first LCH in time. This improves uplink scheduling efficiency.

In the implementation 3 in the configuration case 1, there are at least two remaining PDBs of the buffered data on the first LCH, and when a minimum remaining PDB in the at least two remaining PDBs is used to determine a remaining PDB range corresponding to the buffered data, the buffered data on the first LCH is reported via a same LCG.

Specifically, when the first LCG is associated with the first remaining PDB range, and the buffered data on the first LCH includes packets in different data bursts, there are at least two remaining PDBs of the buffered data on the first LCH at a moment. When the minimum remaining PDB of the buffered data on the first LCH is used to determine the remaining PDB range corresponding to the buffered data, that the remaining PDB of the first data is within the first remaining PDB range may be understood as that the minimum remaining PDB of the buffered data on the first LCH is within the first remaining PDB range. The buffered data on the first LCH is the first data. Correspondingly, the BSR indicates the first data volume and the first LCG, where the first data volume corresponds to the first LCG, the first data volume includes the data volume of the first data, and the remaining PDB of the first data is within the first remaining PDB range.

For example, with reference to Table 1 and still based on an example in which the first LCH is the LCH 1, in buffered data on the LCH 1, a remaining PDB of a part of data (for example, denoted as data 0) is 1 ms, and a remaining PDB of the other part of data (for example, denoted as data 1) is 3 ms. When the minimum remaining PDB of the buffered data on the LCH 1 is used to determine the remaining PDB range of the buffered data, the minimum remaining PDB is 1 ms, and a remaining PDB range of the remaining PDB is denoted as a remaining PDB range 1, for example, 0 ms to 2 ms. In this case, the BSR indicates the following two items: an LCG 0 and a data volume 0. In other words, a data volume of all of the buffered data on the LCH 1 (namely, the data 0 and the data 1) is reported via the LCG 0, for example, the data volume 0 corresponding to the LCG 0 includes the data volume of all of the buffered data on the LCH 1.

For example, with reference to FIG. 13 and still based on an example in which the first LCH is the LCH 1, in the buffered data on the LCH 1, a remaining PDB of a part of data (for example, denoted as data 1) is 1 ms, a remaining PDB of another part of data (for example, denoted as data 2) is 3 ms, and a remaining PDB of still another part of data (for example, denoted as data n) is 2n-1 milliseconds. When the minimum remaining PDB of the buffered data on the LCH 1 is used to determine the remaining PDB range of the buffered data, the minimum remaining PDB is 1 ms, and a remaining PDB range of the remaining PDB is denoted as a remaining PDB range 1, for example, 0 ms to 2 ms. In this case, the BSR indicates the following two items: an LCG 1 and a data volume 1. In other words, a data volume of all of the buffered data on the LCH 1 (namely, the data 1 to the data n) is reported via the LCG 1. Correspondingly, the data volume 1 corresponding to the LCG 1 includes the data volume of all of the buffered data on the LCH 1.

In other words, even if the buffered data on the first LCH includes data of different remaining PDBs, the terminal device determines, based on the minimum remaining PDB, an LCG indicated by the BSR. In this way, after receiving the BSR, the network device may learn of a data volume and a remaining PDB range, to properly allocate an uplink resource. For example, when a remaining PDB indicated by the remaining PDB range is small, the network device preferentially allocates the uplink resource based on the data volume corresponding to the remaining PDB range, to improve uplink scheduling efficiency.

### Example 2

In Example 2, a configuration case of the first LCH is the configuration case 2. Correspondingly, a used configuration rule is shown in Table 2 (or Table 3) in the configuration rule 1. The following provides descriptions by using three implementations (that is, the following implementation 4 to implementation 6).

In the implementation 4 in the configuration case 2, there are at least two remaining PDBs of the buffered data on the first LCH, and the buffered data on the first LCH is reported via different LCGs.

Specifically, when the first LCG is associated with the first remaining PDB range, and the buffered data on the first LCH further includes second data, the BSR indicates not only the first data volume and the first LCG, but also a second data volume and the second LCG. The first data volume corresponds to the first LCG, the first data volume includes the data volume of the first data, and the remaining PDB of the first data is within the first remaining PDB range. The second data volume corresponds to the second LCG, the second data volume includes a data volume of the second data, and a remaining PDB of the second data is within the second remaining PDB range.

For example, with reference to Table 2 (or Table 3) and still based on an example in which the first LCH is the LCH 1, the PDB threshold is set to 2 ms, that is, T=2 ms. In the buffered data on the LCH 1, a remaining PDB of a part of data (for example, denoted as data 0) is 1 ms, the remaining PDB is less than the PDB threshold, and a remaining PDB range of the remaining PDB is denoted as a remaining PDB range 1, for example, 0 ms to 2 ms; and a remaining PDB of the other part of data (for example, denoted as data 1) is 3 ms, the remaining PDB is greater than the PDB threshold, and a remaining PDB range of the remaining PDB is denoted as a remaining PDB range 2, for example, 2 ms to 4 ms. In this case, the BSR indicates the following four items: an LCG 0, a data volume 0, an LCG 1, and a data volume 1. In other words, a data volume of the data 0 on the LCH 1 is reported via the LCG 0, for example, the data volume 0 corresponding to the LCG 0 includes a data volume of the data 1; and the data volume of the data 1 on the LCH 1 is reported via the LCG 1, for example, the data volume 1 corresponding to the LCG 1 includes a data volume of data 2.

For example, with reference to FIG. 14 and still based on an example in which the first LCH is the LCH 1, in the buffered data on the LCH 1, a remaining PDB of a part of data (for example, denoted as data 1) is 1 ms, and a remaining PDB range of the remaining PDB is denoted as a remaining PDB range 1, for example, 0 ms to 2 ms; and a remaining PDB of the other part of data (for example, denoted as data 2) is 3 ms, and a remaining PDB range of the remaining PDB is denoted as a remaining PDB range 2, for example, 2 ms to 30 ms. In this case, the BSR indicates the following four items: an LCG 0, a data volume 0, an LCG 1, and a data volume 1. In other words, a data volume of the data 1 on the LCH 1 is reported via the LCG 0, for example, the data volume 0 corresponding to the LCG 0 includes the data volume of the data 1; and a data volume of the data 2 on the LCH 1 is reported via the LCG 1, for example, the data volume 1 corresponding to the LCG 1 includes the data volume of the data 2.

It may be easily understood that, based on the remaining PDB, the buffered data on the first LCH may be allocated to a smaller remaining PDB range. For example, all remaining PDBs of the buffered data on the first LCH are less than the PDB threshold. In this case, the buffered data on the first LCH is allocated to one remaining PDB range denoted as a remaining PDB range 1. The remaining PDB range 1 may be considered as the first remaining PDB range. For an indication status of the BSR, refer to the descriptions of the first data volume and the first LCG in the implementation 4. Details are not described herein again. For example, with reference to FIG. 23 and based on an example in which the first LCH is any one of an LCH 1 to an LCH n, in the buffered data on the first LCH, when a remaining PDB of the buffered data is less than the PDB threshold (*θ*), a data volume of the buffered data (namely, the first data volume) is reported via the first LCG.

Alternatively, all remaining PDBs of the buffered data on the first LCH are greater than the PDB threshold. In this case, the buffered data on the first LCH is allocated to one remaining PDB range denoted as a remaining PDB range 2. The remaining PDB range 2 may be considered as the second remaining PDB range. For an indication status of the BSR, refer to the descriptions of the second data volume and the second LCG in the implementation 4. Details are not described herein again.

In other words, even if the buffered data on the first LCH includes data of different remaining PDBs, the terminal device determines, based on the remaining PDBs, the at least one LCG indicated by the BSR. For example, when the remaining PDB is less than the PDB threshold, the terminal device reports a data volume of the part of data via the first LCG; or when the remaining PDB is greater than or equal to the PDB threshold, the terminal device reports a data volume of the part of data via the second LCG. In this way, after receiving the BSR, the network device may learn of at least one data volume, at least one remaining PDB range, and a correspondence between a data volume and a remaining PDB range, to properly allocate an uplink resource. For example, when a remaining PDB indicated by a remaining PDB range is small, the network device preferentially allocates an uplink resource based on a data volume corresponding to the remaining PDB range. For another example, when a remaining PDB indicated by a remaining PDB range is large, and a transmission resource is insufficient, the network device may allocate an uplink resource later based on a data volume corresponding to the remaining PDB range, and may preferentially allocate an uplink resource to a data volume corresponding to a small remaining PDB, to improve uplink scheduling efficiency.

In the implementation 5 in the configuration case 2, there is one remaining PDB of the buffered data on the first LCH, and the buffered data on the first LCH is reported via one LCG.

Specifically, when the first LCG is associated with the first remaining PDB range, and the buffered data on the first LCH includes a packet in a data burst, there is one remaining PDB of the buffered data on the first LCH at a moment. When the remaining PDB of the buffered data on the first LCH is within the first remaining PDB range, the buffered data on the first LCH is the first data, in other words, the buffered data on the first LCH is equivalent to the first data. It may be understood that the first data is all of the buffered data on the first LCH. Correspondingly, the BSR indicates the first data volume and the first LCG, where the first data volume corresponds to the first LCG, the first data volume includes the data volume of the first data, and the remaining PDB of the first data is within the first remaining PDB range.

For example, with reference to FIG. 15 and still based on an example in which the first LCH is the LCH 1, the PDB threshold is set to 2 ms, that is, T=2 ms. At the moment 1, a remaining PDB of all of the buffered data (for example, denoted as data 1) on the LCH 1 is 1 ms, the remaining PDB is less than the PDB threshold, and a remaining PDB range of the remaining PDB is denoted as a remaining PDB range 1, for example, 0 ms to 2 ms. In this case, the BSR indicates the following two items: an LCG 0 and a data volume 0. In other words, a data volume of all of the buffered data (namely, the data 1) on the LCH 1 is reported via the LCG 0, for example, the data volume 0 corresponding to the LCG 0 includes the data volume of all of the buffered data on the LCH 1. At the moment 2, a remaining PDB of all of the buffered data on the LCH 1 is 3 ms, the remaining PDB is greater than the PDB threshold, and a remaining PDB range of the remaining PDB is denoted as a remaining PDB range 2, for example, 2 ms to 30 ms, which is not shown in FIG. 15. In this case, the BSR indicates the following two items: an LCG 1 and a data volume 1. In other words, the data volume of all of the buffered data on the LCH 1 is reported via the LCG 1, for example, the data volume 1 corresponding to the LCG 1 includes the data volume of all of the buffered data on the LCH 1.

In other words, when the buffered data on the first LCH has a same remaining PDB, for example, when the remaining PDB is less than the PDB threshold, or when the remaining PDB is greater than or equal to the PDB threshold, the terminal device reports a data volume of the buffered data via one LCG (namely, the first LCG). In this way, after receiving the BSR, the network device may learn of a data volume and a remaining PDB range to allocate an uplink resource, so that the terminal device uploads the buffered data on the first LCH in time. This improves uplink scheduling efficiency.

In the implementation 6 in the configuration case 2, there are at least two remaining PDBs of the buffered data on the first LCH, and when a minimum remaining PDB in the at least two remaining PDBs is used to determine a remaining PDB range corresponding to the buffered data, the buffered data on the first LCH is reported via a same LCG.

Specifically, when the first LCG is associated with the first remaining PDB range, and the buffered data on the first LCH includes packets in different data bursts, there are at least two remaining PDBs of the buffered data on the first LCH at a moment. When the minimum remaining PDB of the buffered data on the first LCH is used to determine the remaining PDB range corresponding to the buffered data, that the remaining PDB of the first data is within the first remaining PDB range may be understood as that the minimum remaining PDB of the buffered data on the first LCH is within the first remaining PDB range, for example, the minimum remaining PDB of the buffered data on the first LCH is less than the PDB threshold. The buffered data on the first LCH is the first data. Correspondingly, the BSR indicates the first data volume and the first LCG, where the first data volume corresponds to the first LCG, the first data volume includes the data volume of the first data, and the remaining PDB of the first data is within the first remaining PDB range.

For example, with reference to Table 2 (or Table 3) and still based on an example in which the first LCH is the LCH 1, in the buffered data on the LCH 1, a remaining PDB of a part of data (for example, denoted as data 0) is 1 ms, and a remaining PDB of the other part of data (for example, denoted as data 1) is 3 ms. When the minimum remaining PDB of the buffered data on the LCH 1 is used to determine the remaining PDB range of the buffered data, the minimum remaining PDB is 1 ms, and a remaining PDB range of the remaining PDB is denoted as a remaining PDB range 1, for example, 0 ms to 2 ms. In this case, the BSR indicates the following two items: an LCG 0 and a data volume 0. In other words, a data volume of all of the buffered data on the LCH 1 (namely, the data 0 and the data 1) is reported via the LCG 0, for example, the data volume 0 corresponding to the LCG 0 includes the data volume of all of the buffered data on the LCH 1.

For example, with reference to FIG. 16 and still based on an example in which the first LCH is the LCH 1, the PDB threshold is set to 2 ms, that is, T=2 ms. In the buffered data on the LCH 1, a remaining PDB of a part of data (for example, denoted as data 1) is 1 ms, and a remaining PDB of the other part of data (for example, denoted as data 2) is 3 ms. When the minimum remaining PDB of the buffered data on the LCH 1 is used to determine the remaining PDB range of the buffered data, the minimum remaining PDB is 1 ms, the remaining PDB is less than the PDB threshold, and a remaining PDB range of the remaining PDB is denoted as a remaining PDB range 1, for example, 0 ms to 2 ms. In this case, the BSR indicates the following two items: an LCG 0 and a data volume 0. In other words, a data volume of all of the buffered data on the LCH 1 (namely, the data 1 and the data 2) is reported via the LCG 0. Correspondingly, the data volume 0 corresponding to the LCG 0 includes the data volume of all of the buffered data on the LCH 1.

In other words, even if the buffered data on the first LCH includes data of different remaining PDBs, the terminal device determines, based on the minimum remaining PDB, an LCG indicated by the BSR. In this way, after receiving the BSR, the network device may learn of a data volume and a remaining PDB range, to properly allocate an uplink resource. For example, when a remaining PDB indicated by the remaining PDB range is less than the PDB threshold, the network device preferentially allocates the uplink resource based on the data volume corresponding to the remaining PDB range, to improve uplink scheduling efficiency.

In another possible implementation, the configuration rule in S802 includes the configuration rule 2. In this case, a priority level of the first data is within the first priority level range, and the priority level of the first data is determined based on the remaining PDB of the first data and a data type of the first data. For details, refer to descriptions of Example 3 and Example 4.

### Example 3

In Example 3, a configuration case of the first LCH is the configuration case 1. Correspondingly, a used configuration rule is shown in Table 4 in the configuration rule 2. The following provides descriptions by using two implementations (the following implementation 7 and implementation 8).

In Example 3, a priority level is determined based on a remaining PDB of the buffered data and a data type of the buffered data.

A function of the data type in a priority level determining process is first described. The first data is used as an example. When the first data is first-type data, the first LCG is an LCG in a first set. The first set includes at least one LCG, and each LCG in the first set is used to transmit the first-type data. Alternatively, when the first data is second-type data, the first LCG is an LCG in a second set. The second set includes at least one LCG, and each LCG in the second set is used to transmit the second-type data. Each LCG in the first set is different from each LCG in the second set.

As shown in FIG. 17, the first-type data may be an I type, that is, data of an I frame; the second-type data may be a P type, that is, data of a P frame; and the first set includes an LCG 0, an LCG 2, an LCG 4, and an LCG 6, and the second set includes an LCG 1, an LCG 3, an LCG 5, and an LCG 7.

As shown in FIG. 17, when the first data is the data of the I frame, the first LCH may be the LCH 1, and the first LCG is one of the LCG 0, the LCG 2, the LCG 4, and the LCG 6. A specific LCG to which the first data is mapped is determined based on the remaining PDB of the first data. For details, refer to the following descriptions of the implementation 7 and the implementation 8.

As shown in FIG. 17, when the first data is the data of the P frame, the first LCH may be an LCH 2, and the first LCG is one of the LCG 1, the LCG 3, the LCG 5, and the LCG 7. A specific LCG to which the first data is mapped is determined based on the remaining PDB of the first data.

For details, refer to the following descriptions of the implementation 7 and the implementation 8.

A function of the remaining PDB in the priority level determining process is then described. The first data is used as an example. When the buffered data on the first LCH is data of same type, and there is one remaining PDB of the buffered data on the first LCH, the first data is all of the buffered data on the first LCH. For details, refer to descriptions of the implementation 7 in the configuration case 1.

When the buffered data on the first LCH is data of same type, and there are at least two remaining PDBs of the buffered data on the first LCH, when the priority level of the buffered data is determined based on a minimum remaining PDB of the buffered data on the first LCH, the first data is all of the buffered data on the first LCH. For details, refer to descriptions of the implementation 8 in configuration case 1.

For example, the implementation 7 in the configuration case 1 and the implementation 8 in the configuration case 1 are described as follows:
In the implementation 7 in the configuration case 1, there is one remaining PDB of the buffered data on the first LCH, and the buffered data on the first LCH is reported via one LCG.

Specifically, when the first LCG is associated with the first priority level range, and the buffered data on the first LCH includes a packet in a data burst, there is one remaining PDB of the buffered data on the first LCH at a moment. When the priority level of the buffered data on the first LCH is within the first priority level range, the buffered data on the first LCH is the first data, in other words, the buffered data on the first LCH is equivalent to the first data. It may be understood that the first data is all of the buffered data on the first LCH. Correspondingly, the BSR indicates the first data volume and the first LCG, where the first data volume corresponds to the first LCG, the first data volume includes the data volume of the first data, and the remaining PDB of the first data is within the first remaining PDB range.

For example, with reference to FIG. 18 or FIG. 24 and still based on an example in which the first LCH is the LCH 1, at the moment 1, a remaining PDB of all of the buffered data (for example, denoted as data 1) on the LCH 1 is 1 ms, and a priority level determined based on the remaining PDB is within a priority level range 1, for example, 1 to 2. In this case, the BSR indicates the following two items: an LCG 1 and a data volume 1. In other words, a data volume of all of the buffered data (for example, the data 1) on the LCH 1 is reported via the LCG 1, for example, the data volume 1 corresponding to the LCG 1 includes the data volume of all of the buffered data on the LCH 1. At the moment 2, a remaining PDB of all of the buffered data (for example, denoted as data 2) on the LCH 1 is 3 ms, and a priority level determined based on the remaining PDB is within a priority level range 2, for example, 3 to 4. The priority level range 2 is not shown in FIG. 18. In this case, the BSR indicates the following two items: an LCG 2 and a data volume 2. In other words, a data volume of all of the buffered data (for example, the data 2) on the LCH 1 is reported via the LCG 2, for example, the data volume 2 corresponding to the LCG 2 includes the data volume of all of the buffered data on the LCH 1.

In other words, when the buffered data on the first LCH is the data of same type and has a same remaining PDB, the terminal device reports a data volume of the buffered data via one LCG (namely, the first LCG). In this way, after receiving the BSR, the network device may learn of a data volume and a priority level range to allocate an uplink resource, so that the terminal device uploads the buffered data on the first LCH in time. This improves uplink scheduling efficiency.

In the implementation 8 in the configuration case 1, there are at least two remaining PDBs of the buffered data on the first LCH, and when the minimum remaining PDB in the at least two remaining PDBs is used to determine a priority level range corresponding to the buffered data, the buffered data on the first LCH is reported via a same LCG.

Specifically, when the first LCG is associated with the first priority level range, and the buffered data on the first LCH includes packets in different data bursts, there are at least two remaining PDBs of the buffered data on the first LCH at a moment. When the minimum remaining PDB of the buffered data on the first LCH is used to determine the priority level range corresponding to the buffered data, that the remaining PDB of the first data is within the first priority level range may be understood as that the minimum remaining PDB of the buffered data on the first LCH is within the first priority level range. The buffered data on the first LCH is the first data. Correspondingly, the BSR indicates the first data volume and the first LCG, where the first data volume corresponds to the first LCG, the first data volume includes the data volume of the first data, and the remaining PDB of the first data is within the first remaining PDB range.

For example, with reference to Table 2 (or Table 3) and still based on an example in which the first LCH is the LCH 1, in the buffered data on the LCH 1, a remaining PDB of a part of data (for example, denoted as data 0) is 1 ms, and a remaining PDB of the other part of data (for example, denoted as data 1) is 3 ms. When the priority level range of the buffered data is determined based on the minimum remaining PDB of the buffered data on the LCH 1, the minimum remaining PDB is 1 ms, and a priority level range determined based on the remaining PDB is denoted as a priority level range 1, for example, 1 to 2. In this case, the BSR indicates the following two items: an LCG 0 and a data volume 0. In other words, a data volume of all of the buffered data on the LCH 1 (namely, the data 0 and the data 1) is reported via the LCG 0, for example, the data volume 0 corresponding to the LCG 0 includes the data volume of all of the buffered data on the LCH 1.

For example, with reference to FIG. 19 and still based on an example in which the first LCH is the LCH 1, in the buffered data on the LCH 1, a remaining PDB of a part of data (for example, denoted as data 1) is 1 ms, a remaining PDB of another part of data (for example, denoted as data 2) is 3 ms, and a remaining PDB of still another part of data (for example, denoted as data n) is 2n-1 milliseconds. When the priority level range of the buffered data is determined based on the minimum remaining PDB of the buffered data on the LCH 1, the minimum remaining PDB is 1 ms, and a priority level range determined based on the remaining PDB is denoted as a priority level range 1, for example, 1 to 2. In this case, the BSR indicates the following two items: an LCG 1 and a data volume 1. In other words, a data volume of all of the buffered data (namely, the data 1 to the data n) on the LCH 1 is reported via the LCG 1, for example, the data volume 1 corresponding to the LCG 1 includes the data volume of all of the buffered data on the LCH 1.

In other words, even if the buffered data on the first LCH includes data of different remaining PDBs, the terminal device determines the priority level of the buffered data based on the minimum remaining PDB, and determines, based on the priority level of the buffered data, an LCG indicated by the BSR. In this way, after receiving the BSR, the network device may learn of a data volume and a priority level range, to properly allocate an uplink resource. For example, when a priority level indicated by the priority level range is low, the network device preferentially allocates an uplink resource based on a data volume corresponding to the priority level range, to improve uplink scheduling efficiency.

It may be easily understood that, in Example 3, the network device configures one priority level range for each LCH. The first LCH is used as an example. As shown in FIG. 27, the logical channel grouping method in this embodiment of this application further includes S807.

S807: The network device sends fourth configuration information to the terminal device. Correspondingly, the terminal device receives the fourth configuration information from the network device.

The fourth configuration information is used to configure a priority level range corresponding to the first LCH. For example, the priority level range configured by using the fourth configuration information includes all or a part of the L priority level ranges. The first LCH may be dynamically adjusted within the priority level range corresponding to the first LCH. For example, the priority level range corresponding to the first LCH is 1 to 16. At the moment 1, a priority level of the first LCH is a priority level 1. At the moment 2, a priority level of the first LCH is a priority level 2. For details, refer to the descriptions of the implementation 7 in the configuration case 1 and the implementation 8 in the configuration case 1. Details are not described herein again.

For example, the fourth configuration information may be information in LogicalChannelConfig, for example, priority Range: SEQUENCE (SIZE (1...8)) OF INTEGER(0...16).

It should be understood that, in this embodiment of this application, an example in which the first data is all of the buffered data on the first LCH is used. A priority level of the first data is equivalent to the priority level of the first LCH, and the two may be replaced with each other.

Table 2 (or Table 3) is used as an example. The priority level range configured for the first LCH by using the fourth configuration information is denoted as (1, 16). In other words, the priority level of the first LCH may be dynamically adjusted between 16 priorities (namely, a priority level 1 to a priority level 16).

FIG. 18 (or FIG. 19) is used as an example. An LCG range configured for the first LCH (denoted as the LCH 1) by using the second configuration information is denoted as (1, 2n). In other words, the priority level of the first LCH may be dynamically adjusted between 2n priority levels (namely, a priority level 1 to a priority level n).

It may be easily understood that S807 is performed before S801, and S806 and S807 may be simultaneously performed. For example, the fourth configuration information and the fifth configuration information are sent via a same message. Alternatively, the network device first performs S806, and then performs S807. This is not limited in embodiments of this application. In S807, the first LCH is used as an example for description. When the terminal device has another LCH, for example, the second LCH that is also used to transmit the XR service data, the network device also configures a priority level range for the second LCH. The priority level range configured for the first LCH may be the same as or different from the priority level range configured for the second LCH. This is not limited in embodiments of this application.

### Example 4

In Example 4, a configuration case of the first LCH is the configuration case 2. Correspondingly, a used configuration rule is shown in Table 5 (or Table 6) in the configuration rule 2. The following provides descriptions by using two implementations (the following implementation 9 and implementation 10).

In Example 4, a priority level is still determined based on the remaining PDB of the buffered data and the data type of the buffered data.

For a function of the data type in a priority level determining process, refer to the descriptions in Example 3. Details are not described herein again.

A function of the remaining PDB in the priority level determining process is then described. The first data is used as an example. When the buffered data on the first LCH is data of same type, and there is one remaining PDB of the buffered data on the first LCH, the first data is all of the buffered data on the first LCH. For details, refer to descriptions of the implementation 9 in the configuration case 2.

When the buffered data on the first LCH is data of same type, and there are at least two remaining PDBs of the buffered data on the first LCH, when the priority level of the buffered data is determined based on a minimum remaining PDB of the buffered data on the first LCH, the first data is all of the buffered data on the first LCH. For details, refer to descriptions of the implementation 10 in configuration case 2.

For example, the implementation 9 in the configuration case 2 and the implementation 10 in the configuration case 2 are described as follows:
In the implementation 9 in the configuration case 2, there is one remaining PDB of the buffered data on the first LCH, and the buffered data on the first LCH is reported via one LCG.

Specifically, when the first LCG is associated with the first priority level range, and the buffered data on the first LCH includes a packet in a data burst, there is one remaining PDB of the buffered data on the first LCH at a moment. When the priority level of the buffered data on the first LCH is within the first priority level range, for example, is less than the priority level threshold, the buffered data on the first LCH is the first data, in other words, the buffered data on the first LCH is equivalent to the first data. It may be understood that the first data is all of the buffered data on the first LCH. Correspondingly, the BSR indicates the first data volume and the first LCG, where the first data volume corresponds to the first LCG, the first data volume includes the data volume of the first data, and the remaining PDB of the first data is within the first remaining PDB range.

For example, with reference to FIG. 20 and still based on an example in which the first LCH is the LCH 1, the priority level threshold is set to 2 ms, that is, K=2. Normal LCGs configured for the first LCH include an LCG 2, an LCG 4, and an LCG 6. For details, refer to the related technology. An LCG additionally configured for the first LCH is an LCG 0. At the moment 1, a remaining PDB of all of the buffered data (for example, denoted as data 0) on the LCH 1 is 1 ms, a priority level (for example, the priority level is 1) determined based on the remaining PDB is less than the priority level threshold, and a priority level range determined based on the remaining PDB is denoted as a priority level range 1, for example, 1 to K. In this case, the BSR indicates the following two items: an LCG 0 and a data volume 0. In other words, a data volume of all of the buffered data (namely, the data 0) on the LCH 1 is reported via the LCG 0, for example, the data volume 0 corresponding to the LCG 0 includes the data volume of all of the buffered data on the LCH 1. At the moment 2, a remaining PDB of all of the buffered data on the LCH 1 is 3 ms, a priority level (for example, the priority level is 3) determined based on the remaining PDB is greater than the priority level threshold, and a priority level range determined based on the remaining PDB is denoted as a priority level range 2, for example, K to Kmax, which is not shown in FIG. 20. In this case, the BSR indicates the following two items: an LCG 1 and a data volume 1. In other words, a data volume of all of the buffered data on the LCH 1 is reported via the LCG 1, for example, the data volume 1 corresponding to the LCG 1 includes the data volume of all of the buffered data on the LCH 1.

An example in which the first LCH is the LCH 2 is used. The priority level threshold is set to 2 ms, that is, K=2. Normal LCGs configured for the first LCH include an LCG 3, an LCG 5, and an LCG 7. For details, refer to the related technology. An LCG additionally configured for the first LCH is an LCG 1. At the moment 1, a remaining PDB of all of the buffered data on the LCH 2 is 1 ms, a priority level (for example, the priority level is 1) determined based on the remaining PDB is less than the priority level threshold, and a priority level range determined based on the remaining PDB is denoted as a priority level range 1, for example, 1 to K. In this case, the BSR indicates the following two items: an LCG 1 and a data volume 1. In other words, a data volume of all buffered data on the LCH 2 is reported via the LCG 1, for example, the data volume 1 corresponding to the LCG 1 includes the data volume of all of the buffered data on the LCH 2.

In other words, when the buffered data on the first LCH is the data of same type and has a same remaining PDB, for example, when a priority level determined based on the remaining PDB is less than the priority level threshold, or when a priority level determined based on the remaining PDB is greater than or equal to the priority level threshold, the terminal device reports a data volume of the buffered data via one LCG (namely, the first LCG). In this way, after receiving the BSR, the network device may learn of a data volume and a priority level range to allocate an uplink resource, so that the terminal device uploads the buffered data on the first LCH in time. This improves uplink scheduling efficiency.

In the implementation 10 in the configuration case 2, there are at least two remaining PDBs of the buffered data on the first LCH, and when the minimum PDB in the at least two remaining PDBs is used to determine a priority level range corresponding to the buffered data, the buffered data on the first LCH is reported via a same LCG.

Specifically, when the first LCG is associated with the first priority level range, and the buffered data on the first LCH includes packets in different data bursts, there are at least two remaining PDBs of the buffered data on the first LCH at a moment. When the minimum remaining PDB of the buffered data on the first LCH is used to determine the priority level range corresponding to the buffered data, that a priority level of the first data is within the first priority level range may be understood as that a lowest priority level of the buffered data on the first LCH is within the first priority level range. The lowest priority level is determined based on the minimum remaining PDB in the at least two remaining PDBs. The buffered data on the first LCH is the first data. Correspondingly, the BSR indicates the first data volume and the first LCG, where the first data volume corresponds to the first LCG, the first data volume includes the data volume of the first data, and the remaining PDB of the first data is within the first remaining PDB range.

For example, with reference to Table 5 (or Table 6) and still based on an example in which the first LCH is the LCH 1, in the buffered data on the LCH 1, a remaining PDB of a part of data (for example, denoted as data 0) is 1 ms, and a remaining PDB of the other part of data (for example, denoted as data 1) is 3 ms. When the priority level range of the buffered data is determined based on the minimum remaining PDB of the buffered data on the LCH 1, the minimum remaining PDB is 1 ms, and a priority level range determined based on the remaining PDB is denoted as a priority level range 1, for example, 1 to 2. In this case, the BSR indicates the following two items: an LCG 0 and a data volume 0. In other words, a data volume of all of the buffered data on the LCH 1 (namely, the data 0 and the data 1) is reported via the LCG 0, for example, the data volume 0 corresponding to the LCG 0 includes the data volume of all of the buffered data on the LCH 1.

For example, with reference to FIG. 21 and still based on an example in which the first LCH is the LCH 1, the priority level threshold is set to 2, that is, K=2. Normal LCGs configured for the first LCH include an LCG 2, an LCG 4, and an LCG 6. For details, refer to the related technology. An LCG additionally configured for the first LCH is an LCG 0. In the buffered data on the LCH 1, a remaining PDB of a part of data (for example, denoted as data 0) is 1 ms, and a remaining PDB of the other part of data (for example, denoted as data 1) is 3 ms. When the priority level range of the buffered data is determined based on the minimum remaining PDB of the buffered data on the LCH 1, the minimum remaining PDB is 1 ms, a priority level (for example, the priority level is 1) determined based on the remaining PDB is less than the priority level threshold, and a priority level range determined based on the remaining PDB is denoted as a priority level range 1, for example, 1 to K. In this case, the BSR indicates the following two items: an LCG 0 and a data volume 0. In other words, a data volume of all of the buffered data (namely, the data 0 and the data 1) on the LCH 1 is reported via the LCG 0. Correspondingly, the data volume 0 corresponding to the LCG 0 includes the data volume of all of the buffered data on the LCH 1.

For example, an example in which the first LCH is the LCH 2. The priority level threshold is set to 2, that is, K=2. Normal LCGs configured for the first LCH include an LCG 3, an LCG 5, and an LCG 7. For details, refer to the related technology. An LCG additionally configured for the first LCH is an LCG 1. In the buffered data on the LCH 2, a remaining PDB of a part of data is 1 ms, and a remaining PDB of the other part of data is 3 ms. When the priority level range of the buffered data is determined based on the minimum remaining PDB of the buffered data on the LCH 2, the minimum remaining PDB is 1 ms, a priority level (for example, the priority level is 1) determined based on the remaining PDB is less than the priority level threshold, and a priority level range determined based on the remaining PDB is denoted as a priority level range 1, for example, 1 to K. In this case, the BSR indicates the following two items: an LCG 1 and a data volume 1. In other words, a data volume of all buffered data on the LCH 2 is reported via the LCG 1. Correspondingly, the data volume 1 corresponding to the LCG 1 includes the data volume of all of the buffered data on the LCH 2.

In other words, even if the buffered data on the first LCH includes data of different remaining PDBs, the terminal device determines the priority level of the buffered data based on the minimum remaining PDB, and then determines, based on the priority level of the buffered data, an LCG indicated by the BSR. In this way, after receiving the BSR, the network device may learn of a data volume and a priority level range, to properly allocate an uplink resource. For example, when a priority level indicated by the priority level range is less than the priority level threshold, the network device preferentially allocates an uplink resource based on a data volume corresponding to the priority level range, to improve uplink scheduling efficiency.

After receiving the BSR, the network device performs S808.

S808: The network device allocates an uplink resource to the terminal device according to the preset configuration rule and based on the first data volume and the first LCG.

The configuration rule in S808 is consistent with the configuration rule in S802. Details are not described herein again.

For example, when the BSR indicates the first data volume and the first LCG, and the first LCG is associated with the first remaining PDB range, the network device allocates the uplink resource to the terminal device based on the first remaining PDB range and the first data volume.

For example, when the first remaining PDB range is 29 ms to 30 ms, the network device may allocate the uplink resource to the terminal device later (for example, at a 5^{th} ms or 10^{th} ms after the BSR is received). In this period (for example, after the network device receives the BSR in S802 and before the network device allocates the uplink resource based on the BSR), the network device may preferentially allocate an uplink resource to another terminal device.

For another example, when the first remaining PDB range is 0 ms to 2 ms, the network device preferentially allocates the uplink resource to the terminal device (for example, at a 1st ms after the BSR is received).

When the first LCG is associated with the first priority level range, the network device allocates the uplink resource to the terminal device based on the first priority level range and the first data volume.

For example, when the first priority level range is 15 to 16, the network device may allocate the uplink resource to the terminal device later (for example, at a 5^{th} ms or 10^{th} ms after the BSR is received). In this period (for example, after the network device receives the BSR in S802 and before the network device allocates the uplink resource based on the BSR), the network device may preferentially allocate an uplink resource to another terminal device.

For another example, when the first priority level range is 1 to 2, the network device preferentially (for example, at a 1st ms after the BSR is received) allocates the uplink resource to the terminal device.

In some embodiments, when the BSR further indicates a second data volume and the second LCG, when the second LCG is associated with the second remaining PDB range, the network device allocates the uplink resource to the terminal device based on the first remaining PDB range, the first data volume, the second remaining PDB range, and the second data volume.

When the second LCG is associated with the second priority level range, the network device allocates the uplink resource to the terminal device based on the first priority level range, the first data volume, the second priority level range, and the second data volume.

For the terminal device, after the uplink resource is allocated to the terminal device, the terminal device preferentially transmits, on the uplink resource, the buffered data corresponding to the first data volume. Optionally, when a sufficient uplink resource is allocated to the terminal device, the terminal device further transmits, on the uplink resource, buffered data corresponding to the second data volume. For details, refer to the related technology. Details are not described herein again.

It may be easily understood that, in this embodiment of this application, two or more of the five pieces of configuration information (the first configuration information to the fifth configuration information) may be transmitted via a same message. This is not limited in embodiments of this application.

The foregoing mainly describes the solutions provided in embodiments of this application from a perspective of interaction between the network elements. Correspondingly, an embodiment of this application further provides a communication apparatus. The communication apparatus may be the network element in the foregoing method embodiment, an apparatus including the foregoing network element, or a component that may be used in the network element. It may be understood that, to implement the foregoing functions, the communication apparatus includes a corresponding hardware structure and/or software module for performing each function. A person skilled in the art should easily be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

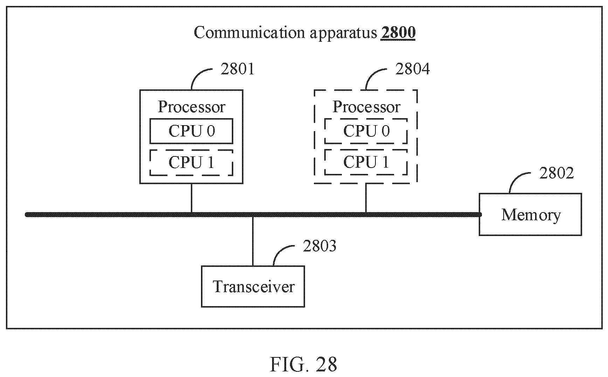

For example, FIG. 28 is a diagram of a structure of a communication apparatus according to an embodiment of this application. The communication apparatus may be a terminal device, or may be a chip (system) or another part or component that may be disposed in a terminal device. Alternatively, the communication apparatus may be a network device, or may be a chip (system) or another part or component that may be disposed in a network device.

As shown in FIG. 28, a communication apparatus 2800 may include a processor 2801. Optionally, the communication apparatus 2800 may further include a memory 2802 and/or a transceiver 2803. The processor 2801 is coupled to the memory 2802 and the transceiver 2803. For example, the processor 2801, the memory 2802, and the transceiver 2803 may be connected through a communication bus.

The following describes each component of the communication apparatus 2800 in detail with reference to FIG. 28.

The processor 2801 is a control center of the communication apparatus 2800, and may be one processor, or may be a general term of a plurality of processing elements. For example, the processor 2801 is one or more central processing units (central processing units, CPUs), or may be an application-specific integrated circuit (application-specific integrated circuit, ASIC), or may be one or more integrated circuits configured to implement embodiments of this application, for example, one or more digital signal processors (digital signal processors, DSPs), or one or more field programmable gate arrays (field programmable gate arrays, FPGAs).

Optionally, the processor 2801 may run or execute a software program stored in the memory 2802, and invoke data stored in the memory 2802, to perform various functions of the communication apparatus 2800.

In specific implementation, in an embodiment, the processor 2801 may include one or more CPUs, for example, a CPU 0 and a CPU 1 shown in FIG. 28.

In specific implementation, in an embodiment, the communication apparatus 2800 may alternatively include a plurality of processors, for example, the processor 2801 and a processor 2804 that are shown in FIG. 28. Each of the processors may be a single-core processor (single-CPU), or may be a multi-core processor (multi-CPU). The processor herein may refer to one or more devices, circuits, and/or processing cores configured to process data (for example, computer program instructions).

The memory 2802 is configured to store the software program for executing the solutions of this application, and the processor 2801 controls execution of the software program. For a specific implementation, refer to the foregoing method embodiment. Details are not described herein again.

Optionally, the memory 2802 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and can be accessed by a computer. However, this is not limited thereto. The memory 2802 may be integrated with the processor 2801, or may exist independently, and is coupled to the processor 2801 through an interface circuit (not shown in FIG. 28) of the communication apparatus 2800. This is not specifically limited in embodiments of this application.

The transceiver 2803 is configured to communicate with another communication apparatus. For example, the communication apparatus 2800 is a terminal device, and the transceiver 2803 may be configured to communicate with a network device. For another example, the communication apparatus 2800 is a network device, and the transceiver 2803 may be configured to communicate with a terminal device.

Optionally, the transceiver 2803 may include a receiver and a transmitter (which are not separately shown in FIG. 28). The receiver is configured to implement a receiving function, and the transmitter is configured to implement a sending function.

Optionally, the transceiver 2803 may be integrated with the processor 2801, or may exist independently, and is coupled to the processor 2801 through an interface circuit (not shown in FIG. 28) of the communication apparatus 2800. This is not specifically limited in embodiments of this application.

It may be easily understood that the structure of the communication apparatus 2800 shown in FIG. 28 does not constitute a limitation on the communication apparatus. An actual communication apparatus may include more or fewer components than those shown in the figure, or combine some components, or have different component arrangements.

In addition, for technical effect of the communication apparatus 2800, refer to the technical effect of the method in the foregoing method embodiment. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Optionally, an embodiment of this application further provides a computer program product carrying computer instructions. When the computer instructions are run on a computer, the computer is enabled to perform the method described in the foregoing embodiment.

Optionally, an embodiment of this application further provides a computer-readable storage medium. The computer-readable storage medium stores computer instructions. When the computer instructions are run on a computer, the computer is enabled to perform the method described in the foregoing embodiment.

Optionally, an embodiment of this application further provides a chip, including a processing circuit and a transceiver circuit. The processing circuit and the transceiver circuit are configured to implement the method described in the foregoing embodiment. The processing circuit is configured to perform a processing action in a corresponding method, and the transceiver circuit is configured to perform a receiving/sending action in the corresponding method.

All or some of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs is loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing apparatus embodiment is merely an example. For example, division into the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position or distributed on a plurality of network units. Some or all of the units may be selected based on an actual requirement, to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a communication device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A logical channel grouping method, comprising:
determining, by a terminal device, that to-be-reported buffered data exists on a first logical channel LCH; and
sending, by the terminal device, a buffer status report BSR to a network device according to a preset configuration rule and based on the to-be-reported buffered data on the first LCH, wherein
the BSR indicates a first data volume and a first logical channel group LCG, the first data volume corresponds to the first LCG, the first data volume comprises a data volume of first data, the buffered data comprises the first data, and the first LCG is one of LCGs configured for the first LCH; and
a remaining packet delay budget PDB of the first data is within a first remaining PDB range; and the configuration rule comprises a configuration rule 1: L LCGs and L remaining PDB ranges, wherein the L LCGs comprise the first LCG, the L remaining PDB ranges comprise the first remaining PDB range, the first LCG is associated with the first remaining PDB range, and L is a positive integer greater than or equal to 2; or
a priority level of the first data is within a first priority level range, and the priority level of the first data is determined based on a remaining PDB of the first data and a data type of the first data; and the configuration rule comprises a configuration rule 2: L LCGs and L priority level ranges, wherein the L LCGs comprise the first LCG, the L priority level ranges comprise the first priority level range, the first LCG is associated with the first priority level range, and L is a positive integer greater than or equal to 2.

2. The method according to claim 1, wherein when the configuration rule comprises the configuration rule 1, the configuration rule 1 further indicates that a second LCG is associated with a second remaining PDB range, wherein
the L LCGs comprise the second LCG, and the L remaining PDB ranges comprise the second remaining PDB range.

3. The method according to claim 2, wherein when the buffered data further comprises second data, and a remaining PDB of the second data is within the second remaining PDB range, the BSR further indicates a second data volume and the second LCG, wherein the second data volume corresponds to the second LCG, and the second data volume comprises a data volume of the second data.

4. The method according to claim 1 or 2, wherein when the remaining PDB of the first data is within the first remaining PDB range, that the buffered data comprises the first data comprises:
when there is one remaining PDB of the buffered data, the buffered data is the first data.

5. The method according to claim 1 or 2, wherein there are at least two remaining PDBs of the buffered data; and that a remaining PDB of the first data is within a first remaining PDB range comprises:
when a minimum remaining PDB of the buffered data is used to determine a remaining PDB range corresponding to the buffered data, the minimum remaining PDB of the buffered data is within the first remaining PDB range, wherein
the buffered data is the first data.

6. The method according to any one of claims 1 to 5, wherein
when the remaining PDB of the first data is within the first remaining PDB range, before the determining, by a terminal device, that to-be-reported buffered data exists on a first LCH, the method further comprises:
receiving, by the terminal device, first configuration information from the network device, wherein the first configuration information indicates the configuration rule 1.

7. The method according to claim 6, wherein before the determining, by a terminal device, that to-be-reported buffered data exists on a first LCH, the method further comprises:
receiving, by the terminal device, second configuration information from the network device, wherein the second configuration information is used to configure an LCG range corresponding to the first LCH, and the LCG range comprises all or a part of the L LCGs.

8. The method according to claim 2 or 3, wherein the second remaining PDB range is [T, Pmax], wherein T represents a PDB threshold, and Pmax represents a maximum transmission latency allowed for the buffered data.

9. The method according to any one of claims 1 to 5 or 8, wherein the first remaining PDB range is [0, T), wherein T represents the PDB threshold.

10. The method according to claim 1, wherein when the configuration rule comprises the configuration rule 2, the configuration rule 2 further indicates that a second LCG is associated with a second priority level range, wherein the L LCGs comprise the second LCG, and the L priority level ranges comprise the second priority level range.

11. The method according to claim 10, wherein
when the first data is first-type data, the first LCG is an LCG in a first set, the first set comprises at least one LCG, and each LCG in the first set is used to transmit the first-type data; or
when the first data is second-type data, the first LCG is an LCG in a second set, the second set comprises at least one LCG, each LCG in the second set is used to transmit the second-type data; and each LCG in the first set is different from each LCG in the second set.

12. The method according to claim 11, wherein when the priority level of the first data is within the first priority level range, that the buffered data comprises the first data comprises:
when the buffered data is data of same type, and there is one remaining PDB of the buffered data, the buffered data is the first data; or
when the buffered data is data of same type, there are at least two remaining PDBs of the buffered data, and a minimum remaining PDB of the buffered data is used to determine a priority level of the buffered data, the buffered data is the first data.

13. The method according to any one of claims 10 to 12, wherein before the determining, by a terminal device, that to-be-reported buffered data exists on a first LCH, the method further comprises:
receiving, by the terminal device, third configuration information from the network device, wherein the third configuration information indicates the configuration rule 2.

14. The method according to claim 13, wherein before the determining, by a terminal device, that to-be-reported buffered data exists on a first LCH, the method further comprises:
receiving, by the terminal device, fourth configuration information from the network device, wherein the fourth configuration information is used to configure a priority level range corresponding to the first LCH, and the priority level range configured by using the fourth configuration information comprises one or more priority levels in the L priority level ranges.

15. The method according to any one of claims 10 to 12, wherein the first priority level range is [0, K), and the second priority level range is [K, Kmax], wherein
K represents a priority level threshold, and Kmax represents a lowest priority level that may exist in the buffered data.

16. The method according to any one of claims 1 to 5, 8 to 12, and 15, wherein before the determining, by a terminal device, that to-be-reported buffered data exists on a first LCH, the method further comprises:
receiving, by the terminal device, fifth configuration information from the network device, wherein the fifth configuration information is used to configure the first LCG for the first LCH.

17. A logical channel grouping method, comprising:
receiving, by a network device, a buffer status report BSR from a terminal device, wherein to-be-reported buffered data exists on a first logical channel LCH of the terminal device, the BSR indicates a first data volume and a first logical channel group LCG, the first data volume corresponds to the first LCG, the first data volume comprises a data volume of first data, the buffered data comprises the first data, and the first LCG is one of LCGs configured for the first LCH; and
allocating, by the network device, an uplink resource to the terminal device according to a preset configuration rule and based on the first data volume and the first LCG, wherein
a remaining packet delay budget PDB of the first data is within a first remaining PDB range; and the configuration rule comprises a configuration rule 1: L LCGs and L remaining PDB ranges, wherein the L LCGs comprise the first LCG, the L remaining PDB ranges comprise the first remaining PDB range, the first LCG is associated with the first remaining PDB range, and L is a positive integer greater than or equal to 2; or
a priority level of the first data is within a first priority level range, and the priority level of the first data is determined based on a remaining PDB of the first data and a data type of the first data; and the configuration rule comprises a configuration rule 2: L LCGs and L priority level ranges, wherein the L LCGs comprise the first LCG, the L priority level ranges comprise the first priority level range, the first LCG is associated with the first priority level range, and L is a positive integer greater than or equal to 2.

18. The method according to claim 17, wherein when the configuration rule comprises the configuration rule 1, the configuration rule 1 further indicates that a second LCG is associated with a second remaining PDB range, wherein
the L LCGs comprise the second LCG, and the L remaining PDB ranges comprise the second remaining PDB range.

19. The method according to claim 18, wherein when the buffered data further comprises second data, and a remaining PDB of the second data is within the second remaining PDB range, the BSR further indicates a second data volume and the second LCG, wherein the second data volume corresponds to the second LCG, and the second data volume comprises a data volume of the second data.

20. The method according to claim 17 or 18, wherein when the remaining PDB of the first data is within the first remaining PDB range, that the buffered data comprises the first data comprises:
when there is one remaining PDB of the buffered data, the buffered data is the first data.

21. The method according to claim 17 or 18, wherein there are at least two remaining PDBs of the buffered data; and that a remaining PDB of the first data is within a first remaining PDB range comprises:
when a minimum remaining PDB of the buffered data is used to determine a remaining PDB range corresponding to the buffered data, the minimum remaining PDB of the buffered data is within the first remaining PDB range, wherein
the buffered data is the first data.

22. The method according to any one of claims 17 to 21, wherein when the remaining PDB of the first data is within the first remaining PDB range, before the receiving, by a network device, a BSR from a terminal device, the method further comprises:
sending, by the network device, first configuration information to the terminal device, wherein the first configuration information indicates the configuration rule 1.

23. The method according to claim 22, wherein before the receiving, by a network device, a BSR from a terminal device, the method further comprises:
sending, by the network device, second configuration information to the terminal device, wherein the second configuration information is used to configure an LCG range corresponding to the first LCH, and the LCG range comprises all or a part of the L LCGs.

24. The method according to claim 18 or 19, wherein the second remaining PDB range is [T, Pmax], wherein T represents a PDB threshold, and Pmax represents a maximum transmission latency allowed for the buffered data.

25. The method according to any one of claims 17 to 21 or 24, wherein the first remaining PDB range is [0, T), wherein T represents the PDB threshold.

26. The method according to claim 17, wherein when the configuration rule comprises the configuration rule 2, the configuration rule 2 further indicates that a second LCG is associated with a second priority level range, wherein the L LCGs comprise the second LCG, and the L priority level ranges comprise the second priority level range.

27. The method according to claim 26, wherein
when the first data is first-type data, the first LCG is an LCG in a first set, the first set comprises at least one LCG, and each LCG in the first set is used to transmit the first-type data; or
when the first data is second-type data, the first LCG is an LCG in a second set, the second set comprises at least one LCG, each LCG in the second set is used to transmit the second-type data; and each LCG in the first set is different from each LCG in the second set.

28. The method according to claim 27, wherein when the priority level of the first data is within the first priority level range, that the buffered data comprises the first data comprises:
when the buffered data is data of same type, and there is one remaining PDB of the buffered data, the buffered data is the first data; or
when the buffered data is data of same type, there are at least two remaining PDBs of the buffered data, and a minimum remaining PDB of the buffered data is used to determine a priority level of the buffered data, the buffered data is the first data.

29. The method according to any one of claims 26 to 28, wherein before the receiving, by a network device, a BSR from a terminal device, the method further comprises:
sending, by the network device, third configuration information to the terminal device, wherein the third configuration information indicates the configuration rule 2.

30. The method according to claim 29, wherein before the receiving, by a network device, a BSR from a terminal device, the method further comprises:
sending, by the network device, fourth configuration information to the terminal device, wherein the fourth configuration information is used to configure a priority level range corresponding to the first LCH, and the priority level range configured by using the fourth configuration information comprises one or more priority levels in the L priority level ranges.

31. The method according to any one of claims 26 to 28, wherein the first priority level range is [0, K), and the second priority level range is [K, Kmax], wherein
K represents a priority level threshold, and Kmax represents a lowest priority level that may exist in the buffered data.

32. The method according to any one of claims 17 to 21, 24 to 28, and 31, wherein before the receiving, by a network device, a BSR from a terminal device, the method further comprises:
sending, by the network device, fifth configuration information to the terminal device, wherein the fifth configuration information is used to configure the first LCG for the first LCH.

33. A terminal device, comprising a processor and a memory, wherein the processor is coupled to the memory, the memory stores program instructions, and when the program instructions stored in the memory are executed by the processor, the method according to any one of claims 1 to 16 is implemented.

34. A network device, comprising a processor and a memory, wherein the processor is coupled to the memory, the memory stores program instructions, and when the program instructions stored in the memory are executed by the processor, the method according to any one of claims 17 to 32 is implemented.

35. A chip, comprising a processor and an input/output interface, wherein the input/output interface is configured to receive a signal from an apparatus other than the chip and transmit the signal to the processor, or send a signal from the processor to an apparatus other than the chip, and the processor is configured to implement the method according to any one of claims 1 to 32 through a logic circuit or by executing code instructions.

36. A computer-readable storage medium, wherein the storage medium stores a computer program or instructions, and when the computer program or the instructions are executed, the method according to any one of claims 1 to 32 is implemented.

37. A communication system, comprising a terminal device and a network device, wherein
the terminal device is configured to perform the method according to any one of claims 1 to 16; and
the network device is configured to perform the method according to any one of claims 17 to 32.
